(19) Europäisches Patentamt
European Patent Office
Office européen des brevets

(11) EP 3 462 526 A1

(12) EUROPEAN PATENT APPLICATION

(43) Date of publication:
**03.04.2019 Bulletin 2019/14**

(21) Application number: **17193447.4**

(22) Date of filing: **27.09.2017**

(51) Int Cl.:
***H01M 4/86*** *(2006.01)*
***C25B 11/04*** *(2006.01)*
***H01M 4/90*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fritz-Haber-Institut Der Max-Planck-Gesellschaft**
**14195 Berlin (DE)**

(72) Inventors:
- **Schlögl, Robert**
  **10825 Berlin (DE)**
- **Heumann, Saskia**
  **45239 Essen (DE)**
- **Ding, Yuxiao**
  **45468 Mülheim an der Ruhr (DE)**

(74) Representative: **Hoffmann Eitle**
**Patent- und Rechtsanwälte PartmbB**
**Arabellastraße 30**
**81925 München (DE)**

# (54) ATOMICALLY DISPERSED METAL SPECIES IN AN IONIC LIQUID ON THE SURFACE OF A CARBON MATERIAL HAVING SP2 HYBRIDIZATION, AND METHOD FOR THE PREPARATION THEREOF

(57) The present invention relates to a catalytically active material, comprising atomically dispersed metal species on the surface of a carbon material, wherein the atomically dispersed metal species are dispersed in an ionic liquid, and wherein the surface of the carbon material comprises carbon atoms having sp2 hybridization; ink for coating electrodes comprising the catalytically active material; an electrode coated with the catalytically active material; an electrolyzer comprising an electrode coated with the catalytically active material; use of the catalytically active material, the electrode, or the electrolyzer for oxidation, the reduction of oxygen, or the electrochemical oxidation of water; and a process for making the catalytically active material comprising the steps of atomically dispersing a metal species in an ionic liquid to form a first composition, and mixing the first composition with a carbon material having carbon atoms with sp2 hybridization on the surface.

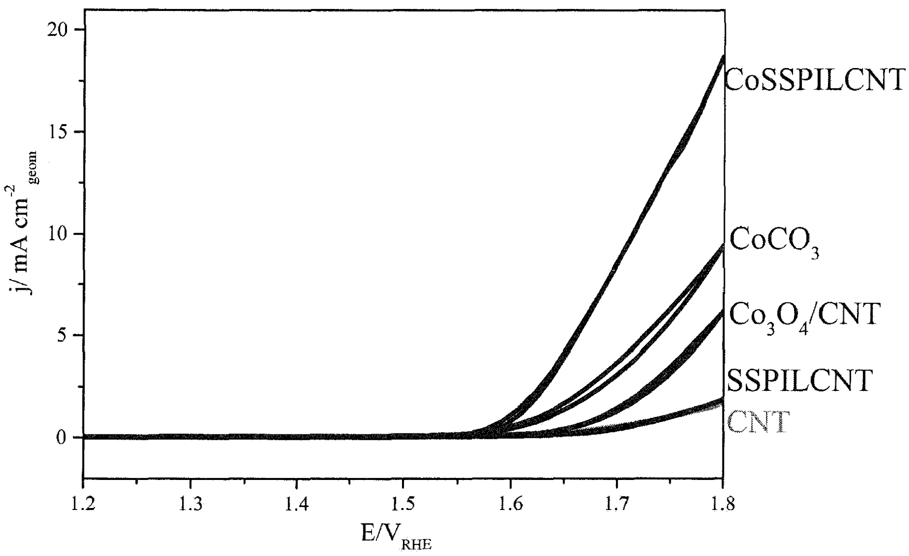


Figure 9.

EP 3 462 526 A1

## Description

### TECHNICAL FIELD OF THE INVENTION

The present invention relates to a novel catalytically active material comprising atomically dispersed metal species, an ionic liquid, and a carbon material, a method for preparation thereof, and the use thereof in catalysis generally and specifically for catalyzing oxidation reactions, the oxygen evolution reaction (OER), and the oxygen reduction reaction (ORR).

### BACKGROUND ART

Catalytically active materials increase the rate of a reaction without modifying the overall standard Gibbs energy change in the reaction. The production of most industrially important chemicals involves catalysis. As a result, the development of new catalytically active materials is one of the main goals of modern chemical research, as such materials have the capacity to allow reactions to be carried out more efficiently and more selectively. In addition to increasing efficiency and selectivity, two important factors in the development of new catalytically active materials is that they have good stability and activity. Improving these properties of the catalytically active materials allows the increase of the total number of transformations which can be catalyzed by the material, while also increasing the rate at which the transformations are catalyzed.

Electrochemical oxidation of water to give hydrogen and oxygen is a key future technology for regenerative energy storage. While wind, solar photovoltaic or hydro sources produce renewable electricity, it is generally intermittent in nature. In this context, hydrogen is a key energy carrier because it can be stored either in molecular form or by reversible conversion into hydrogen carrier molecules. The stored hydrogen can later be used for combustion or, more efficiently, in hydrogen fuel cells. In this context, the development of efficient, highly active, and stable catalytically active materials for the oxidation of water continues to be centrally important to the conversion of light energy into chemical energy.

Meanwhile, the reduction of oxygen in the ORR is a fundamental reaction in energy conversion, playing an essential role in fuel cells and lithium-air batteries. As these technologies have great potential to revolutionize energy production and storage, the development of efficient, highly active, and stable catalytically active materials for the reduction of oxygen is of great importance in catalysis.

Redox reactions of water molecules require that the metal centers of the catalysts occupy multiple oxidation states. Because the most stable ground state of a metal in widely varying oxidation states often possesses very different coordination environments, the same ligand always leads to the dynamical instability of the catalysts across the entire multielectron transformation (J. Am. Chem. Soc. 2016, 138, 11017-11030).

Due to its abundance and low cost, Co has become one of the most popular non-noble metals for the design of robust OER catalysts requiring moderate overpotentials. A recent report about $Co^{2+}$ salts in phosphate electrolyte (Co-Pi) shows an inexpensive and easily manufactured self-repair system (J. Am. Chem. Soc., 2009, 131, 3838-3839). The dissolution process can be countered by continual catalyst formation establishing a dynamic equilibrium between $Co^{2+}$ $HPO_4^{2-}$ in solution and $Co^{3+}$ $HPO_4^{2-}$ on the anodically poised electrode. This family of catalysts eliminates the problem of ligand oxidative instability. However, the electrodeposited material consists of a micrometer-sized particle film, which has relatively low efficiency as a heterogeneous catalyst.

Homogeneous catalysts can help to overcome such problems because of the greater availability of the catalytic centre to the reactants. This can help to increase the efficiency of the catalytic processes. However, in spite of their numerous benefits, many homogeneous processes are not used on an industrial scale because of various obstacles, such as the separation of the products, the need for organic solvents, and the difficulties in recycling the catalyst. Thus, obtaining highly dispersed metal catalysts which combine the benefits of both homogeneous and heterogeneous catalysts has been a long standing interest in the field of catalysis.

In this regard, carbon nanotubes (CNT) have found applications as supports in catalysis and have also been proven to enhance the electron-transfer rate in many redox reactions (Angew. Chem. Int. Ed. 2009, 48, 4751-4754).

Significant developments have also been made in the use of Ionic liquids (IL) as solvents or catalysts in liquid phase catalysis (Chem. Rev. 2002, 102, 3667-3691).

Polymerized ILs or poly(ionic liquid)s (PILs) have also been applied in some fields in polymer chemistry and materials science (Nat. Mater. 2009, 8, 621-629). It has been shown that ILs can be used as the solvent and stabilizer to produce metal nanoparticles having higher catalytic activities and selectivities (Green Chem. 2011, 13, 1210-1216).

It has also been demonstrated that a uniform distribution of metal nanoparticles can be dispersed on an electron-conducting multi-walled CNT surface using a PIL, which introduces a large number of surface functional groups onto the CNTs (Angew. Chem. Int. Ed. 2009, 48, 4751-4754). Similar systems have also been developed with ILs which have not undergone polymerisation: in Green Chem. 2015, 17, 1107-1112, a novel liquid mixture of an IL and metal particles

on a CNT was formed. This system provided a condensed IL phase having a homogenous reaction micro-environment delivering improved catalytic activity relative to the metal particles alone. At the same time, this heterogeneous catalyst system can be regenerated by gravity separation.

## TECHNICAL PROBLEM

A demand remains for the development of catalytically active materials which combine the advantages of homogeneous and heterogeneous catalysts while providing further improved efficiency and activity and maintaining excellent stability. Further, in view of the prior art, there is a demand for providing a high yielding and efficient process for the synthesis of such a catalytically active material. There is also a demand for a catalytically active material suitable for catalyzing oxidation reactions generally and the OER and ORR, electrodes coated with such a catalytically active material, and electrolyzers comprising such electrodes.

## SUMMARY OF THE INVENTION

The present invention surprisingly solves the above problem by providing a catalytically active material, comprising atomically dispersed metal species on the surface of a carbon material wherein the atomically dispersed metal species are dispersed in an ionic liquid, and wherein the surface of the carbon material comprises carbon atoms having sp2 hybridization. This material delivers improved efficiency and activity, as well as exhibiting excellent stability in a variety of oxidation reactions and also in the OER. Specifically, the present catalytically active material can be coated on an electrode for use in oxidation as well as in the OER. The electrode coated with catalytically active material may be used in an electrolyzer. Moreover, the present invention provides a process for the synthesis of the catalytically active material with high yield and efficiency.

The invention encompasses the following embodiments:

1. The present invention provides a catalytically active material, comprising atomically dispersed metal species on the surface of a carbon material,
wherein the atomically dispersed metal species are dispersed in an ionic liquid, and
wherein the surface of the carbon material comprises carbon atoms having sp2 hybridization.

2. The catalytically active material according to item 1, wherein the atomically dispersed metal species comprise one or more species selected from the group consisting of: alkali metal species, alkaline earth metal species, and transition metal species.

3. The catalytically active material according item 2, wherein the alkali metal species is a Li species, the transition metal species are selected from Sc, Ti, V, Cr, Mn, Fe, Co, Ni, Cu, Zn, Rh, Ru, Pt, and W species, and the transition metal species are preferably selected from Mn, Fe, Co, Ni, Zn, and W species.

4. The catalytically active material according to item 3, wherein the alkali metal species comprises a lithium ion, and the transition metal species comprises an Mn, Fe, Co, Ni, Zn, or W ion, and the transition metal species most preferably comprises a Co(II) ion.

5. The catalytically active material according to any of items 1, 2, 3, or 4, wherein the ionic liquid comprises an unsaturated bond, wherein the unsaturated bond is preferably present in a heterocyclic or heteroaromatic group, wherein the positive charge is located on one of the heteroatoms of the heterocyclic or heteroaromatic group, which heterocyclic or heteroaromatic group may be substituted with (i) an alkene substituent capable of being polymerised, preferably a terminal alkene and/or (ii) an alkyl group having up to 10 carbon atoms, in which H may be replaced one or more times with a group capable of coordinating an atomically dispersed metal species, wherein the ionic liquid more preferably comprises a 1-alkylpyridinium cation, an *N*-*N*-dialkylpyrrolidinium cation, an alkylimidazolium cation, a 1-alkyl-3-vinyl imidazolium cation, a 1-alkyl-3-(vinylbenzyl)-imidazolium cation, a 1-butanesulfonate-3-vinyl imidazolium cation, a 1-octyl-3-ethyl imidazolium cation or a 1-methyl-3-octylimidazolium cation.

6. The catalytically active material according to any of items 1, 2, 3, or 4, wherein the ionic liquid is

a) a polymerized ionic liquid,
b) preferably the product obtainable by polymerisation of an ionic liquid comprising an ion having an alkene substituent, which is preferably a terminal alkene,
c) more preferably the product obtainable by polymerisation of an ionic liquid comprising a 1-alkyl-3-vinyl imidazolium cation,
d) more preferably the product obtainable by polymerisation of an ionic liquid comprising a 1-butanesulfonate-3-vinyl imidazolium cation, and
e) most preferably the product obtainable by polymerisation of 1-butanesulfonate-3-vinyl imidazolium hydrogen sulfate.

7. The catalytically active material according to either of items 5 or 6 a) - d), wherein the ionic liquid comprises a hexafluorophosphate anion, a tetrafluoroborate anion, a halide anion, a bistriflimide anion, and/or a hydrogen sulfate anion.

8. The catalytically active material according to any of items 1, 2, 3, 4, 5, 6, or 7, wherein the carbon material having sp2 hybridization on the surface comprises a fullerene, onion-like carbon, graphene, hydrothermal carbon, and/or graphite, wherein the carbon material is preferably a carbon nanotube (CNT), and wherein the CNT is preferably a multiwalled CNT having an average diameter of about 12.9 nm.

9. The catalytically active material according to any of items 1, 2, 3, 4, 5, 6, 7, or 8, which is suitable for catalyzing an oxidation reaction, the oxygen reduction reaction, or the oxygen evolution reaction.

10. The present invention also provides an ink for coating electrodes comprising the catalytically active material according to any of items 1, 2, 3, 4, 5, 6, 7, 8, or 9.

11. The present invention also provides an electrode coated with the catalytically active material according to any of items 1, 2, 3, 4, 5, 6, 7, 8, or 9.

12. The present invention also provides an electrolyzer comprising an electrode coated with the catalytically active material according to any of items 1, 2, 3, 4, 5, 6, 7, 8, or 9.

13. The present invention also provides a composition comprising atomically dispersed metal species dispersed in an ionic liquid.

14. The present invention also provides a use of the catalytically active material of any of items 1, 2, 3, 4, 5, 6, 7, 8, or 9, the electrode of item 11, or the electrolyzer of item 12 for oxidation, for the reduction of oxygen, or for the electrochemical oxidation of water.

15. The present invention also provides a process for making the catalytically active material of any of items 1, 2, 3, 4, 5, 6, 7, 8, or 9, comprising the steps:

I) atomically dispersing metal species in an ionic liquid to form a first composition, and
II) mixing the first composition with a carbon material having carbon atoms with sp2 hybridization on the surface.

16. The process according to item 15, comprising the step of polymerizing the ionic liquid, wherein the polymerization step is preferably carried out by heating the first composition in step I, and/or wherein the polymerization step is more preferably carried out by heating the mixture formed in step II.

17. The process according to item 15 or 16, further comprising the steps of making an ink comprising the catalytically active material, coating the ink on an electrode, and drying the ink.

18. The process of any one of items 15, 16, or 17 wherein
the molar ratio of the IL/(metal species) in step I is in the range of 0.25 - 3, more preferably 0.4 - 2.4, more preferably 0.8 - 2.3, more preferably 1.4 - 2.2, more preferably 1.9 - 2.1, and is most preferably 2, and/or
in Step I) the ionic liquid comprises a solvent, and /or
Step I) includes a step of heating the first composition, wherein the heating step is preferably carried out at a temperature of 40-120°C for 0.2 to 4 hours, preferably for 0.5 to 2 hours, most preferably for 1 hour, and /or
Step I) includes a step of dispersing the carbon material having carbon atoms with sp2 hybridization on the surface in a solvent to form a second composition, and the mixing step in step II) comprises mixing the first and second composition, and/or
the first composition is added to the second composition in Step II), wherein the addition is preferably carried out dropwise, and/or

Step II) further comprises the step of removing the solvent(s), and/or
Step II) further comprises a heating step, which is preferably carried out at a temperature in the range of 30 - 50°C for 4 - 6 hours, before being heated in the range of 150°C - 250°C for 15 - 25 hours.

Where the present description refers to "preferred" embodiments/features, combinations of these "preferred" embodiments/features shall also be deemed as disclosed as long as this combination of "preferred" embodiments/features is technically meaningful.

Hereinafter, the use of the term "comprising" should be understood as disclosing, as a more restricted embodiment, the term "consisting of" as well, as long as this is technically meaningful.

## BRIEF DESCRIPTION OF THE FIGURES

Unless stated otherwise, all figures relate to embodiments of the catalytically active material of the present invention.

**Figure 1.** a) X-ray photoelectron spectroscopy (XPS) shows N1s spectra of SSPIL/CNT of comparative Example 3 undergo rigid 5 eV binding energy shift when applying 5V bias. b) Relevant core level spectra of the PIL/CNT samples of comparative Example 3 and S2p fits. c) attenuated total reflectance infrared spectra (ATR-IR) of the functional IL 1-butanesulfonate-3-vinyl imidazolium hydrogen sulfate (SSIL) and polymerized IL (SSPIL), which are the starting materials and products of comparative example 2. d) Raman spectra of pristine CNT and CoSSPIL/CNT-1 upon excitation at 537 nm. The inset corresponds to the enlarged area of the CoSSPIL/CNT-1 between 400-800 $cm^{-1}$.

**Figure 2.** Relevant core level spectra of the SSIL/CNT based on comparative example 4 and SSPIL/CNT of comparative example 3. To confirm the interaction between PIL and CNT, SSIL/CNT and SSPIL/CNT were synthesized by combining IL and CNT at a higher IL content, followed by a polymerization process at 190 °C for SSPIL/CNT.

**Figure 3.** C1s XPS spectra of SSPIL/CNT of comparative example 3, CoSSPIL/CNT-0.5, CoSSPIL/CNT-1 (CoSSPIL/CNT) and CoSSPIL/CNT-1.5. Different numbers following - denote different IL monomer/Co molar ratio before the polymerization process.

**Figure 4.** a) and b) annular dark-field STEM (ADF-STEM) images of the CoSSPIL/CNT-1. c) EDX spectrum of the CoSSPIL/CNT-1 sample of example 1. d) Near edge X-ray absorption fine structure (NEXAFS) spectra of different samples of example 1.

**Figure 5.** X-ray diffraction (XRD) curve of the CoSSPIL/CNT-1. All of the main peaks of this sample of example 1 can be attributed to the CNT characteristic peak.

**Figure 6.** Electrochemical impedance spectroscopy (EIS) at the open circuit potential (OCP) of the CoSSPIL/CNT samples of example 1.

**Figure 7.** EIS at the OCP of samples of CNT, $CoCO_3$, comparative examples 1 and 3 and example 1. The first step is to determine the OCP. EIS is carried out at the OCP: 25 data points between 100 kHz and 10 Hz with an amplitude of 10 mV.

**Figure 8.** a) Cyclic voltammogram (CV) of samples of CNT, $CoCO_3$, comparative examples 1 and 3 and example 1. CV is conducted from 1 $V_{RHE}$ (RHE stands for the reversible hydrogen electrode) to 1.8 $V_{RHE}$ at 5 mV/s with automatic iR-compensation using uncompensated resistance (Ru) from impedance spectroscopy. b) CV of different samples of example 1 by dividing geometric area of the active electrode area and the content of Cobalt. CV is conducted from 1 $V_{RHE}$ to 1.8 $V_{RHE}$ at 5 mV/s without iR-compensation. Different numbers denote different IL monomer/Co molar ratio before polymerization process. c) Correlation between the content of IL and Co activity (geometric current per micro mole Co at 1.8 V) for the samples of example 1. d) Stability of different samples of example 1. The potential is kept at 1.8 $V_{RHE}$ for two hours. Different numbers denote different IL monomer/Co molar ratio before the polymerization process.

**Figure 9.** CV of different samples of CNT, $CoCO_3$, comparative examples 1 and 3 and example 1 by dividing geometric area of the active electrode area. CV is conducted from 1 $V_{RHE}$ to 1.8 $V_{RHE}$ at 5 mV/s without automatic iR-compensation.

**Figure 10.** CV of pure CNT and different CoSSPIL/CNT samples from example 1. CV is conducted from 0 $V_{RHE}$ to 1 $V_{RHE}$ at 100 mV/s. Different numbers denote different IL monomer/Co molar ratio before polymerization process.

**Figure 11.** CV of $CoCO_3$ and different CoSSPIL/CNT samples from example 1. CV is conducted from 0.8 $V_{RHE}$ to 1.4 $V_{RHE}$ at 100 mV/s. Different numbers denote different IL monomer/Co molar ratio before polymerization process.

**Figure 12.** Stability tests of the sample of example 1 CoSSPIL/CNT and the sample without the polymerization process of Example 2 (CoSIL/CNT).

**Figure 13.** CV tests of the $Co_3O_4$ nanoparticles on CNT of comparative example 1, $Co_3O_4$ nanoparticles with PIL on CNT of comparative example 5, atomically dispersed Co with SSPIL on CNT of example 1 under the same conditions.

**Figure 14.** CV tests of the catalytically active materials FeSSPIL/Graphene (example 3), FeSSPIL/OLC (Example 4), and FeSSPIL/CNT (example 12) of the invention having different carbon supports under the same conditions.

**Figure 15.** CV tests of catalytically active materials Co(OmimBF$_4$)/CNT (example 6), Co(OmimPF$_6$)/CNT (example 7); and Co(OmimHSO$_4$)/CNT (Example 9) having different ionic liquids under the same conditions.

**Figure 16.** CV tests of catalytically active materials CoSSPIL/CNT (example 1), ZnSSPIL/CNT (example 11), FeSSPIL/CNT (example 12), MnSSPIL/CNT (example 13), and NiSSPIL/CNT (example 14).

**Figure 17.** Shows the ORR carried out with FeSSPIL/CNT of example 12.

## DETAILED DESCRIPTION

A catalytically active material is a material which is capable of increasing the rate of a reaction without modifying the overall standard Gibbs energy change in the reaction.

The metal species in the catalytically active material are "atomically dispersed". This means that the metal species are present as single metal ions or single metal atoms which are not bonded to further metal atoms or ions. The atomically dispersed metal species are not present as nanoparticles or particles.

A "metal species" is a metal ion or metal atom. The atoms may be a single, isolated atom. In addition, both the metal ions and the metal atoms form a complex with further non-metal atoms or ions. For example, the metal ions may be present as sulfates, sulfonates, oxides, carbonates or halides. The halides comprise fluorides, chlorides, bromides, and iodides.

The atomically dispersed metal species can be detected by ADF-STEM images, in which atomically dispersed metal species appear in isolation from one another. In the catalytically active material of the invention, preferably more than 50%, even more preferably more than more than 60%, more than 70%, or more than 80% of the metal species is atomically dispersed. Preferably, more than 90% of the metal species is atomically dispersed, more preferably more than 95% of the metal species is atomically dispersed, and most preferably 100% of the metal species are atomically dispersed. In the present invention, STEM imagining is used to determine the %metal species which are atomically dispersed. To carry out this test, different areas are chosen at random from the STEM image, and the number of the atomically dispersed species in those areas is counted to give a statistical %atoms.

The advantage of atomically dispersed metal species is that the metal species can be well distributed in the catalytic material, and each of the metal species is available as an active site for catalyzing the reaction. As a result, the atomically dispersed metal species deliver an improved relative turnover frequency of the reactions catalyzed, which is even comparable with that of homogeneous catalysts. At the same time, because the metal species is dispersed in an IL on the surface of a carbon material (as discussed below), the advantages of heterogeneous catalysts such as ease of separation of the products can also be achieved. As shown by the experiments discussed below, the use of atomically dispersed metal species achieves several advantages over nanoparticles, including improved dispersion, activity and efficiency.

The atomically dispersed metal species of the invention are on the surface of a carbon material. This means that the metal species are held in proximity to the surface of the carbon material. The metal species are on the surface of the carbon material because they are dispersed in an IL which is also on the surface of the carbon material. They may also be held in proximity to the surface of the carbon material by bonding between the carbon material and the metal species. The carbon material may bond to the metal species by van der Waals interactions, dipole interactions, or cation-pi interactions.

The metal species may be bridged with the IL. This means that the metal species are on the surface of the

carbon material at least in part because the metal species are bonded to an ionic liquid, which in turn is bonded to the surface of the carbon material. The ionic liquid is bonded to the surface of the carbon material by ion-pi interactions, by pi-pi interactions, van der Waals interactions, dipole interactions and/or by a covalent bond. The bond between the surface and the ionic liquid may be between one of the ions of the ionic liquid and a defect as defined below. When the ionic liquid is bonded to the surface of the carbon material by a covalent bond, the covalent bond may be formed between a carbon atom on the surface of the carbon material and an atom of the anion in the ionic liquid. For example, when the ionic liquid comprises a sulfate anion, the covalent bond may be formed between a carbon atom on the surface of the carbon material and the sulfur atom in the sulfate anion to form a sulfonate. The metal species may in turn be complexed by the ionic liquid. It may be bonded to the ionic liquid by coordinate bonding, ionic bonds, by van der Waals interactions, or by dipole interactions.

Without wishing to be bound by theory, the dispersion of the atomically dispersed metal species in the IL and the bridging of the atomically dispersed metal species with the IL are believed to have several advantages. First of all, the interaction between the metal species and the IL can change the electronic structure of the metal species, and facilitate the redox behaviour of the metal species, thereby improving its catalytic activity. Furthermore, the interaction between the atomically dispersed metal species and the IL improves the dispersion of the metal species on the carbon surface and stabilizes the catalytically active material. In addition, the IL may tether the metal species to the carbon surface, which can also increase the activity of the catalyst due to the conductive nature of the sp2 hybridized carbon surface. The IL also acts to increase the ion conductivity of the catalytically active material, which once again can lead to improvements in the catalytic activity of the metal species. Finally, the interaction between the IL and a carbon surface having sp2 hybridization enhances the conductivity of the carbon surface, further facilitating electron transfer reactions catalyzed on the carbon.

The surface of the carbon material comprises carbon atoms having sp2 hybridization. This means that some or all of the carbon atoms on the surface of the carbon material comprise carbon atoms having sp2 hybridization. The presence of carbon atoms having sp2 hybridization provides a support for the catalyst, and furthermore lowers the resistance of the catalytic system, increasing the efficiency of electron transfer reactions.

The surface of the carbon material may also comprise one or more defects. Defects may be present at the edges of the surface of the carbon material, or may be present on the surface of the carbon material. The defects may be atoms on or at the edge of the surface which are capable of forming covalent bonds with ions of ionic liquid. The defects may also be groups (substituents) bonded to a carbon on or at the edge of the surface. The atoms on or at the edge of the surface which are capable of forming covalent bonds with ions of ionic liquid may be carbon or nitrogen atoms. The substituents may comprise heteroatoms, which are atoms other than carbon, such as hydrogen, oxygen, sulfur, phosphorous, or nitrogen. The substituents may be functional groups, such as hydroxy (OH), amine ($NH_2$), carboxyl (COOH), phenol, anhydride, lactone, carbonyl, or thiol (SH).

The amount of substituents on or at the edge of the surface of the carbon material can be identified with AAS (atomic absorption spectroscopy), XPS or temperature programmed desorption (TPD). The amount of heteroatoms in the carbon structures varies depending on the pre-treatment conditions. Typical amounts of heteroatoms are given below, as a %mass of the carbon material.

Multi-walled CNT (MWCNT): C (70-99%), O (0.5 - 20 %) H (0.5 - 2 %), N (0 - 10 %)
Hydrothermal carbon (HTC): (60 - 99 %), O (0.5 - 30 %) H (0.5 - 10), N (0- 20 %)

As explained above, defects may be involved in bonding between the ionic liquid and the surface of the carbon material. In such cases, the invention relates to a catalytically active material, comprising atomically dispersed metal species on the surface of a carbon material, wherein the atomically dispersed metal species are dispersed in an ionic liquid, and wherein the surface of the carbon material comprises carbon atoms having sp2 hybridization, wherein at least one of the ions of the ionic liquid is covalently bonded to the surface of the carbon material, and/or wherein at least one substituent is covalently bonded to the surface of the carbon material and at least one of the ions of the ionic liquid is bonded to at least one of the substituents.

In the case that at least one of the ions of the ionic liquid is covalently bonded to the surface of the carbon material, the covalent bond between the ion of the ionic liquid and the surface of the carbon material may be directly between the ion of the ionic liquid and an atom on or at the edge of the surface and the ionic liquid. Alternatively, the covalent bond may be between an ion of the ionic liquid and a substituent bonded to the carbon surface.

In the case that at least one substituent is covalently bonded to the surface of the carbon material, the ionic liquid ion may also be bonded to the substituent by non-covalent interactions, such as hydrogen bonding, ion-pi interactions, pi-pi interactions, van der Waals interactions, or dipole interactions.

The atomically dispersed metal species of the invention may be one or more elements selected from the group consisting of: alkali metal species, alkaline earth metal species, and transition metal species. Alkali metals can be selected from the elements lithium, sodium, potassium, rubidium, caesium, and francium. Alkaline earth metals can be

selected from the elements beryllium, magnesium, calcium, strontium, barium, and radium. The transition metals can be selected from the elements scandium, titanium, vanadium, chromium, manganese, iron, cobalt, nickel, copper, zinc, yttrium, zirconium, niobium, molybdenum, technetium, ruthenium, rhodium, palladium, silver, cadmium, hafnium, tantalum, tungsten, rhenium, osmium, iridium, platinum, gold, and mercury.

The atomically dispersed metal species of the invention may be one or more elements selected from the group consisting of lanthanides, i.e. the elements Lanthanum, Cerium, Praseodymium, Neodymium, Promethium, Samarium, Europium, Gadolinium, Terbium, Dysprosium, Holmium, Erbium, Thulium, Ytterbium, and Lutetium. The atomically dispersed metal species of the invention may be one or more elements selected from the group consisting of actinides, i.e. the elements actinium, thorium, protactinium, uranium, neptunium, plutonium, americium, curium, berkelium, californium, einsteinium, fermium mendelevium, nobelium, and lawrencium.

When the atomically dispersed metal species of the invention is an alkali metal species, it is preferably a lithium species, and most preferably a lithium ion.

When the atomically dispersed metal species of the invention is a transition metal species, it is preferably one or more selected from scandium, titanium, vanadium, chromium, manganese, iron, cobalt, nickel, copper, zinc, ruthenium, rhodium, palladium, tungsten, and platinum. It more preferably comprises one or more selected from manganese, iron, cobalt, nickel, zinc or tungsten species. Nickel, cobalt and iron are particularly preferred as they may deliver a higher activity. Yet more preferably, it comprises one or more of a nickel, iron, cobalt, or tungsten ion, and most preferably it comprises a Co(II) ion.

An IL is a salt in the liquid state at or below 100°C at atmospheric pressure, i.e. the pure IL is a liquid and contains a mixture of cations and anions in these conditions. The IL is defined by reference to its structure below. Any compositions which fall within the structural definitions below which are not salts in the liquid state at or below 100°C at atmospheric pressure are not ILs within the meaning of the present invention.

In the following, an alkyl group is a group having the general formula $C_nH_{2n+1}$, in which n is 1-10, preferably 1-6, more preferably 1-4, and in which H may be replaced one or more times with a group capable of coordinating an atomically dispersed metal species. The group capable of coordinating an atomically dispersed metal species is preferably selected from sulfonate, alcohol, alkoxide, phosphate ester, phosphonate, organophosphine, amine or carboxylate.

The IL of the invention preferably comprises an unsaturated bond. Preferably, the unsaturated bond is present on the cation of the ionic liquid. This means that at least one of the bonds between the atoms making up the ionic liquid is a double bond. The unsaturated bond may be present in an aromatic or heteroaromatic system (= group). A further unsaturated bond may additionally be present in a group (substituent) attached to the aromatic or heteroaromatic system. More preferably, an unsaturated bond is present in an alkene substituent capable of being polymerised, which is preferably a terminal alkene.

The IL of the invention preferably comprises a cation comprising a heterocyclic system, more preferably a heteroaromatic system, wherein the positive charge is located on one of the heteroatoms of the heterocyclic or heteroaromatic system. The heteroatom bearing the positive charge is preferably nitrogen. The heterocyclic or heteroaromatic system is preferably substituted with an alkyl group, as defined above, and/or a substituent including an unsaturated bond capable of being polymerised. The unsaturated bond which is able to be polymerised is preferably included in an alkene substituent, more preferably a terminal alkene.

The cation of the IL of the invention more preferably comprises a nitrogen-containing heteroaromatic system, wherein the positive charge is located on the nitrogen in the heteroaromatic system, wherein the heteroaromatic system is (i) substituted with an alkyl group substituted with a group capable of coordinating an atomically dispersed metal species, as defined above, wherein the heteroaromatic system is (ii) also substituted with a substituent including an unsaturated bond which is able to be polymerized, preferably an alkene substituent, more preferably a terminal alkene.

The IL of the invention is preferably a 1-alkylpyridinium cation, an *N-N*-dialkylpyrrolidinium cation, an alkylimidazolium cation, a 1-alkyl-3-vinyl imidazolium cation, or a 1-alkyl-3-(vinylbenzyl)-imidazolium cation. The IL more preferably comprises a 1-butanesulfonate-3-vinyl imidazolium cation, a 1-octyl-3-ethyl imidazolium cation (Oeim) or a 1-Methyl-3-octylimidazolium (Omim) cation. The IL most preferably comprises a 1-butanesulfonate-3-vinyl imidazolium cation.

The IL in the catalytically active material of the invention may be a PIL. It is preferably the product obtainable by polymerisation of an IL comprising an ion having an alkene substituent, which is optionally a terminal alkene. The IL is more preferably the product obtainable by polymerisation of an IL comprising a 1-alkyl-3-vinyl imidazolium cation or a 1-alkyl-3-(vinylbenzyl)-imidazolium cation, and more preferably the product obtainable by polymerisation of an IL comprising a 1-butanesulfonate-3-vinyl imidazolium cation. It is most preferably the product obtainable by polymerisation of 1-butanesulfonate-3-vinyl imidazolium hydrogen sulfate. The presence of a PIL in the catalytically active material may further improve the stability of the catalytically active material relative to material in which the IL is not polymerised. The presence of the 1-butanesulfonate-3-vinyl imidazolium cation may improve the efficiency of the catalytic system due to changes in the electronic structure of the metal species on coordination with the sulfonate group of this cation.

Where the anion has not been specified above, the IL in the catalytically active material of the invention may

comprise a hexafluorophosphate anion, a tetrafluoroborate anion, a halide anion (selected from a fluoride anion, a chloride anion, a bromide anion, an iodide anion), a bistriflimide anion, and/or a hydrogen sulfate anion. The presence of the hydrogen sulfonate ion may improve the stability of the catalytic system as it is able to form a covalent bond with the surface of the carbon material. This may also improve the efficiency of the catalytic system due to changes in the electronic structure of the metal species on coordination with this anion.

The IL in the catalytically active material of the invention may comprise a hexafluorophosphate anion and one or more cations selected from the group of an alkylimidazolium cation, a 1-alkyl-3-vinyl imidazolium cation, a 1-alkyl-3-(vinylbenzyl)-imidazolium cation, a 1-butanesulfonate-3-vinyl imidazolium cation, an Oeim cation, an Omim cation, the product obtainable by polymerisation of an IL comprising a cation having an alkene substituent (wherein the alkene substituent is optionally a terminal alkene), the product obtainable by polymerisation of an IL comprising a 1-alkyl-3-vinyl imidazolium cation, or the product obtainable by polymerisation of an IL comprising a 1-butanesulfonate-3-vinyl imidazolium cation.

The IL in the catalytically active material of the invention may also comprise a tetrafluoroborate anion and one or more cations selected from the group of an alkylimidazolium cation, a 1-alkyl-3-vinyl imidazolium cation, a 1-alkyl-3-(vinylbenzyl)-imidazolium cation, a 1-butanesulfonate-3-vinyl imidazolium cation, an Oeim cation, an Omim cation, the product obtainable by polymerisation of an IL comprising a cation having an alkene substituent (wherein the alkene substituent is optionally a terminal alkene), the product obtainable by polymerisation of an IL comprising a 1-alkyl-3-vinyl imidazolium cation, or the product obtainable by polymerisation of an IL comprising a 1-butanesulfonate-3-vinyl imidazolium cation.

The IL in the catalytically active material of the invention may comprise a hydrogensulfate anion and one or more cations selected from the group of an alkylimidazolium cation, a 1-alkyl-3-vinyl imidazolium cation, a 1-alkyl-3-(vinylbenzyl)-imidazolium cation, a 1-butanesulfonate-3-vinyl imidazolium cation, an Oeim cation, an Omim cation, the product obtainable by polymerisation of an IL comprising a cation having an alkene substituent (wherein the alkene substituent is optionally a terminal alkene), the product obtainable by polymerisation of an IL comprising a 1-alkyl-3-vinyl imidazolium cation, or the product obtainable by polymerisation of an IL comprising a 1-butanesulfonate-3-vinyl imidazolium cation.

The IL in the catalytically active material of the invention may comprise the product obtainable by polymerisation of an IL comprising a 1-butanesulfonate-3-vinyl imidazolium cation and an anion selected from one or more of a hexafluorophosphate anion, a tetrafluoroborate anion, a fluoride anion, a chloride anion, a bromide anion, an iodide anion, a bistriflimide anion, and most preferably a hydrogen sulfate anion.

The carbon material having sp2 hybridization on the surface in the catalytically active material of the invention may be selected from one or more of a fullerene, onion-like carbon (OLC), graphene, hydrothermal carbon, and/or graphite. A fullerene is a molecule of carbon in the form of a hollow sphere, ellipsoid, tube, and many other shapes. OLC is a quasi-spherical nanoparticle consisting of fullerene-like carbon layers enclosed by concentric graphitic shells, and HTC is the product of the aqueous carbonization of organic compounds at elevated temperature and pressure. As is known to the person skilled in the art, the ratio of sp2 carbon to sp3 carbon on the surface of HTC depends on the temperature and pressure of the aqueous carbonization conditions, the starting materials used, and the use of an annealing step in an inert gas atmosphere after the aqueous carbonization step. Further, the skilled person knows that the use of higher temperatures in the aqueous carbonization step and the use of an annealing step in an inert gas atmosphere after the aqueous carbonization step increases the ratio of sp2 carbon to sp3 carbon on the surface of HTC.

The carbon material is preferably a fullerene. The fullerene is preferably a CNT, which is a fullerene having a cylindrical nanostructure. The CNT is more preferably a MWCNT, and is yet more preferably a MWCNT having an average diameter of about 12.9 nm. A MWCNT is a CNT consisting of multiple rolled layers of graphene, which form concentric tubes. A multiwalled CNT having an average diameter of about 12.9 nm includes a tolerance of $\pm$ 3.6 nm.

As described above, the surface of the carbon material may also comprise one or more defects.

In one embodiment, the present invention relates to a catalytically active material as defined in the claims in which the atomically dispersed metal species dispersed in a PIL is selected from one or more of a Li ion, a Sc, Ti, V, Cr, Mn, Fe, Co, Ni, Cu, Zn, Rh, Ru, Pt, and W species, preferably a Co ion, and most preferably a Co(II) ion, wherein the carbon material comprises a CNT, and the PIL comprises the product obtainable by polymerisation of an IL comprising a 1-butanesulfonate-3-vinyl imidazolium cation.

In one embodiment, the present invention relates to a catalytically active material as defined in the claims in which the atomically dispersed metal species is as defined in the previous paragraph, wherein the carbon material is a multiwalled CNT having an average diameter of about 12.9 nm, and the PIL is the product obtainable by polymerisation of an IL comprising 1-butanesulfonate-3-vinyl imidazolium hydrogen sulfate.

In one embodiment, the present invention relates to a catalytically active material as defined in the claims in which the atomically dispersed metal species comprises a Co species, the carbon material comprises a fullerene, onion-like carbon, graphene, hydrothermal carbon, and/or graphite, wherein the carbon material preferably comprises a fullerene, wherein the fullerene is more preferably a CNT, which is yet more preferably a MWCNT, and which is most preferably

a MWCNT having an average diameter of about 12.9 nm, and the PIL comprises the product obtainable by polymerisation of an IL comprising a 1-butanesulfonate-3-vinyl imidazolium cation.

In one embodiment, the present invention relates to a catalytically active material as defined in the claims in which the atomically dispersed metal species comprises a Co(II) ion, the carbon material is as defined in the previous paragraph, and the PIL comprises the product obtainable by polymerisation of an IL comprising 1-butanesulfonate-3-vinyl imidazolium hydrogen sulfate.

In one embodiment, the present invention relates to a catalytically active material as defined in the claims in which the atomically dispersed metal species comprises a Co species, the carbon material comprises a CNT, and the IL comprises a hexafluorophosphate anion and one or more cations selected from the group of an alkylimidazolium cation, a 1-alkyl-3-vinyl imidazolium cation, a 1-alkyl-3-(vinylbenzyl)-imidazolium cation, a 1-butanesulfonate-3-vinyl imidazolium cation, an Oeim cation, an Omim cation, the product obtainable by polymerisation of an IL comprising a cation having an alkene substituent (wherein the alkene substituent is optionally a terminal alkene), the product obtainable by polymerisation of an IL comprising a 1-alkyl-3-vinyl imidazolium cation, or the product obtainable by polymerisation of an IL comprising a 1-butanesulfonate-3-vinyl imidazolium cation.

In one embodiment, the present invention relates to a catalytically active material as defined in the claims in which the atomically dispersed metal species comprises a Co species, the carbon material comprises a CNT, and the IL comprises a tetrafluoroborate anion and one or more cations selected from the group in the previous paragraph.

In one embodiment, the present invention relates to a catalytically active material as defined in the claims in which the atomically dispersed metal species comprises a Co species, the carbon material comprises a CNT, and the IL comprises a hydrogensulfate anion and one or more cations selected from the group referred to in the previous paragraph.

In one embodiment, the present invention relates to a catalytically active material as defined in the claims in which the atomically dispersed metal species is a Co species, the carbon material comprises a CNT, and the IL comprises the product obtainable by polymerisation of an IL comprising 1-butanesulfonate-3-vinyl imidazolium hydrogen sulfate.

In one embodiment, the present invention relates to a catalytically active material consisting of a Co species, CNTs, and the product obtainable by polymerisation of an IL consisting of a 1-butanesulfonate-3-vinyl imidazolium cation and an anion, wherein the Co species is atomically dispersed on the surface of the CNT, and wherein the atomically dispersed Co species are dispersed in the product obtainable by polymerisation of the IL consisting of a 1-butanesulfonate-3-vinyl imidazolium cation and the anion.

In one embodiment, the present invention relates to a catalytically active material consisting of Co(II) ions, MWCNTs having an average diameter of about 12.9 nm, and the product obtainable by polymerisation of an IL consisting of 1-butanesulfonate-3-vinyl imidazolium hydrogen sulfate, wherein the Co(II) ions are atomically dispersed on the surface of the MWCNTs, and wherein the atomically dispersed Co(II) ions are dispersed in the product obtainable by polymerisation of the IL consisting of 1-butanesulfonate-3-vinyl imidazolium hydrogen sulfate.

The catalytically active material of the present invention is suitable for catalyzing an oxidation reaction, the ORR, or the OER. The ORR is the reduction of $O_2$ to generate $O^{2-}$. The OER is the oxidation of water to give $H_2$ and $O_2$. The oxidation reactions include phenol oxidation and sulfur-containing compound oxidation.

The invention also relates to ink for coating electrodes comprising the catalytically active material as defined in detail above. The ink comprises the catalytically active material, a solvent, and a binder. The binder may be Nafion solution, and the solvent may comprise water and an organic solvent, preferably an alcohol, most preferably isopropanol (IPA).

The invention also relates to an electrode coated with the catalytically active material as defined above. The electrode may be suitable for catalyzing the oxidation, OER, or ORR reactions discussed above. The electrode may be formed by coating an electrode with the ink defined in the paragraph above and drying the resultant product. The coating may be carried out by dropcoating one or more times.

The invention also relates to an electrolyzer comprising the electrode coated with the catalytically active material defined above. The electrolyzer may be suitable for carrying out the oxidation, OER, or ORR reactions.

The invention also relates to a composition comprising atomically dispersed metal species dispersed in an IL. The atomically dispersed metal species may be complexed by the IL. In this embodiment of the invention, the atomically dispersed metal species and the IL may be any of the combinations of metal species and the IL discussed above.

The invention also relates to the use of the catalytically active material, electrode or the electrolyzer as discussed above to catalyse oxidation, reduction of oxygen, or electrochemical oxidation of water.

Owing to the high surface energy of atomically dispersed metal species, very few synthesis methods have been developed. Usually, these species are prepared by pyrolysis of metal species precursors supported on activated carbon at high temperatures (600-900 °C). However, such methods often lead to complex mixtures of products, such as the mixture of metal nanoparticles, metal oxide nanoparticles, and metal complexed with nitrogen in nanoparticles, wherein the nanoparticles have sizes of tens of nanometers. The atomically dispersed metal species in these mixtures are only visible under atomic-resolution scanning electron microscope (STEM). Therefore, only catalytic materials having

a high level of heterogeneity can be obtained, which hampers studies into the impact of atomically dispersed metal species, and furthermore means that the advantages of the atomically dispersed metal species cannot be fully realised.

There is therefore no generally applicable prior art method to make a catalytically active material comprising an atomically dispersed metal species on carbon surfaces. The method of the invention overcomes the difficulties encountered with previous methods in an inventive manner by using the strong IL ligand to bind the metal species to give a stable environment for the atomically dispersed metal species. Furthermore, a mild annealing temperature can be used, which reduces the degree of agglomeration of the metal species.

The catalytically active material of the invention is obtainable from a process comprising the steps:

I. atomically dispersing metal species in an IL to form a first composition, and
II. mixing the first composition with a carbon material having carbon atoms with sp2 hybridization on the surface.

In the process of the invention, the metal species, IL, and the carbon material may be any of the combinations discussed above. The surface of the carbon material may also comprise one or more defects as described above.

This process may also comprise the step of polymerizing the ionic liquid. The polymerisation step can be carried out by any appropriate method, such as free radical polymerisation. The polymerisation may be initiated by any suitable method and is preferably initiated by irradiation (photopolymerisation) or by heating (thermal polymerisation), and is most preferably carried out by thermal polymerisation. The polymerization step may be carried out by heating the first composition in step I. The heating in step I is preferably carried out at a temperature in the range of 40 - 120°C for 0.2 to 4 hours, preferably for 0.5 to 2 hours, most preferably for 1 hour. The polymerization step is more preferably carried out while heating the mixture of step II. The heating in step II is carried out at a temperature in the range of 30 - 50°C for 4 - 6 hours, preferably at 40°C for 5 hours, before being heated in the range of 100°C - 300°C, preferably 150°C - 250°C, more preferably 180°C to 200°C for 15 - 25 hours, most preferably 20 hours.

When the process of the invention includes a polymerisation step, the metal species, PIL, and the carbon material may be any of the combinations discussed above.

In one embodiment, the present invention relates to a catalytically active material obtainable from a process comprising the steps:

I. atomically dispersing metal species in an IL monomer to form a first composition, wherein the molar ratio of the (IL monomer)/(metal species) may be in the range of 0.25 - 3, 0.4 - 2.4, 0.8 - 2.3, 1.4 - 2.2, 1.9 - 2.1, and is most preferably 2, and
II. mixing the first composition with a carbon material having carbon atoms with sp2 hybridization on the surface, and heating the resultant mixture to polymerise the monomer IL,

in which the atomically dispersed metal species is a Co species, the carbon material comprises a CNT, and the IL monomer comprises 1-butanesulfonate-3-vinyl imidazolium hydrogen sulfate.

The following discussion refers to the process both with and without the polymerisation step as appropriate. In step I, the molar ratio of the IL monomer/metal species may be in the range of 0.25 - 3, 0.4 - 2.4, 0.8 - 2.3, 1.4 - 2.2, 1.9 - 2.1, and is most preferably 2. The activity of the catalytically active material increases with increased content of IL. However, when a large excess of IL is present in the catalytically active material of the invention, the dispersibility of the material in an ink for dropcoating electrodes may decrease. Therefore, the ranges of molar ratios identified above deliver the best balance of activity and dispersion properties. Where the IL is the product obtainable by polymerisation of a monomer, the molar ratio refers to the ratio of the monomer of the IL to the metal species.

In step II of the process, the mixing step may be a step in which the first composition containing an IL is directly mixed with carbon by grinding or sonicating or stirring the carbon in the IL.

The first composition may contain a solvent. Independently, the carbon material in step II may be dispersed in a solvent. The use of a solvent allows the composition to be made with lower amounts of IL. Where the carbon material in step II includes a solvent, Step I may also include a step of dispersing the carbon material in a solvent to form a second composition, and the mixing step in step II then comprises mixing the first and second composition. Where the first composition comprises a solvent, step I is atomically dispersing metal ions in a solution comprising a solvent and an IL to form the first composition. Where solvents are used, Step II may include the step of removing the solvent. The solvent can be removed by any means for removing solvents known in the art, and is preferably by stirring the mixture formed in step II to allow evaporation.

The solvent optionally used in the first composition is not limited as long as it can be removed in step II. The solvent optionally used in the second composition may be the same as or different from that used for the first composition and is not limited as long as it can be used for the dispersion of the carbon material, and can be removed in step II.

Preferably, a polar solvent such as water, alcohol, propanol, or IPA or a mixture of any of these is used for the first and second compositions. Most preferably, water is used as the solvent for the first composition and IPA is used

as the solvent for the second composition. The term solvent when used in relation to the process of making the catalytically active material of the invention is different to the IL.

Step I. of the process of the invention may also include a step of heating the first composition. The heating may be in the range of 40-120°C, for 0.2 to 4 hours, preferably for 0.5 to 2 hours, most preferably for 1 hour.

The mixing in step II may be carried out by addition of the first composition to the carbon material or the second composition in Step II. The addition is preferably carried out dropwise.

The process defined above may further comprise the steps of making an ink comprising the catalytically active material as defined above, coating the ink on an electrode, and drying the ink. Such an ink may be prepared by dispersing the catalytically active material in the solvent and binder defined above. The dispersion may be carried out by sonication, preferably using a ultrasonic bath.

A functional IL with an imidazolium cation bearing one sulfate and one vinyl group and having one hydrogen sulfate as an anion (SSIL) was chosen as a ligand to illustrate the benefits of the present invention by loading cobalt single sites onto the surface of CNTs. Other ILs were also used as discussed below.

Cobalt was introduced via a simple chemical reaction between sulfate groups in an IL precursor and $CoCO_3$ forming an IL salt with atomically dispersed Co species. The energy of physisorption of the imidazolium cation of an IL on a single graphene layer can reach more than 230 kJ/mol, as indicated in Angew. Chem. Int. Ed. 2015, 54, 231-235. Due to this strong adsorption force, ILs can self-assemble on the nanocarbon surfaces in the liquid phase. By introducing it together with the IL, Co can also be well distributed on the CNT surfaces. The thermal-initiation free radical polymerization process depicted in the reaction scheme was carried out at 190 °C.

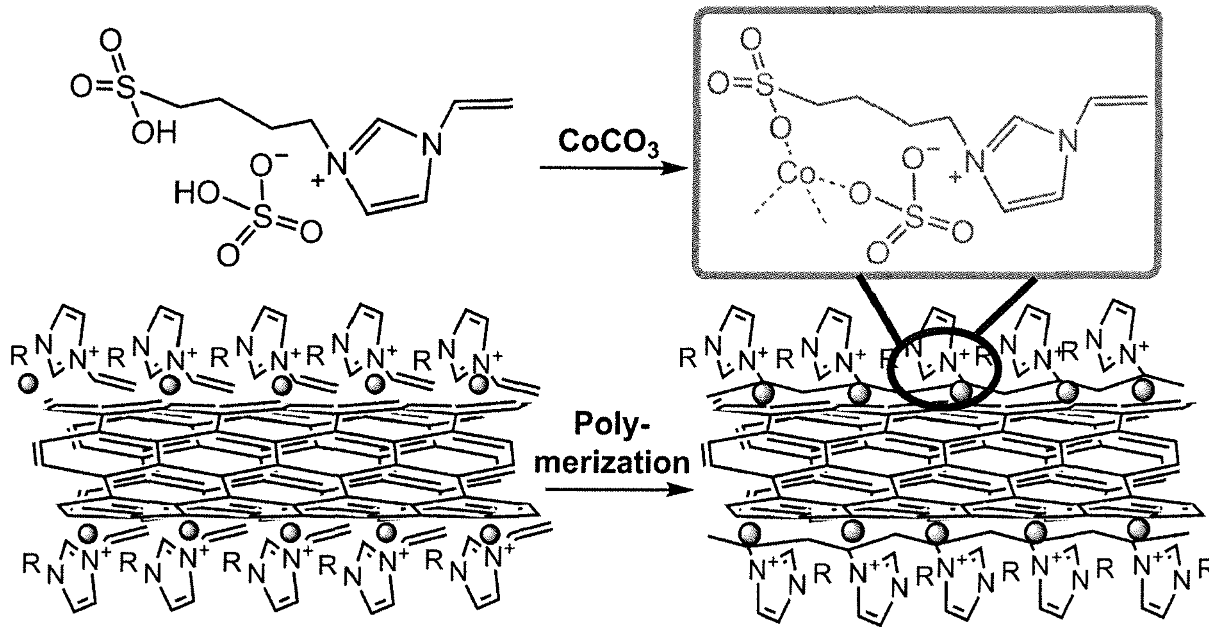


This scheme shows a schematic illustration of the fabrication process of the Co-SSPIL/CNT (SSPIL is a functionalized and polymerized IL). During the reaction between the SSIL and $CoCO_3$, $H_2O$ and $CO_2$ are by-products. The spheres represent single atomically dispersed Co species.

To show how the PIL is attached by chemical forces to the surface of the CNTs, XPS spectral acquisition of PIL/CNT was carried out in a standard (sample grounded) state and also upon applying positive and negative 5V bias.

**Figure 1a** shows N1s as a representative core level of the SSPIL/CNT of comparative example 3 and reveals that the spectrum of the N functional group undergoes a rigid apparent binding energy shift, confirming the electrochemical conductivity between the PIL and the CNT surface. Compared with IL/CNT of comparative example 4, the S1s peak of SSPIL/CNT of comparative example 3 shifts to lower binding energy (**figure 2**). This comparison indicates that the polymerisation of an IL on the surface of a carbon material having sp2 hybridization may deliver a higher binding energy.

The fitted S1s peaks of PIL/CNT of comparative example 3 in **figure 1b** show the transformation from sulfate to sulfonate, which indicate that the sulfate anion of IL reacts with the CNT surface during the polymerization process as depicted in the scheme below.

The chemical bonding between PIL and CNT makes the PIL more stable on CNT and enhances the conductivity of the whole system.

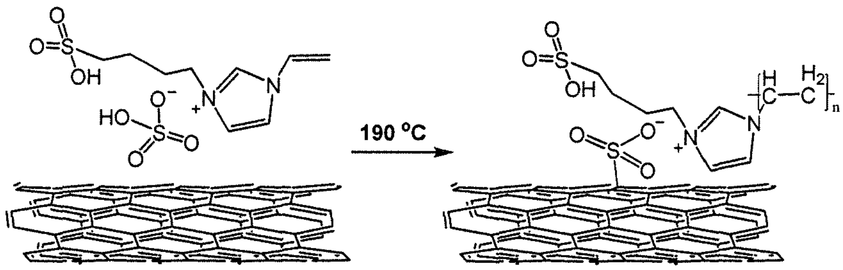


This scheme shows the fabrication process of the PIL/CNT according to comparative example 3. During the polymerization process, the IL anion may react with CNT to form a sulfonate. This chemical bonding makes the PIL more stable on the CNT surface and also ensures the good conductivity of the material during electrochemistry measurements. This bonding mode may also operate with the catalytically active materials comprising metal species.

The coupling pi bonds of the CNTs and PIL supply multiple binding centers and enhance the noncovalent interactions between PIL and the CNT surfaces. The as-obtained CoSSPIL/CNT nanocomposites contain a uniform PIL coating and relatively distributed Co species on the CNT surfaces. The cation of the PIL endows a charged character to the CNTs, breaking the CNT bundles by electrostatic repulsion. Additionally, the pure bulk PILs cannot be dissolved in both water and alcohol, but the well distributed PILs on the CNT surfaces enable the dispersion of the obtained composites.

The polymerization of the vinyl groups of IL was confirmed by ATR-IR of the IL samples before and after polymerization at 190 °C according to comparative example 2 (**Figure 1c**). The main characteristic vibrations of the IL are maintained in the polymer except that of the characteristic C=C peak at 855 $cm^{-1}$ which disappears as the C-H vibrations between 2800-3000 $cm^{-1}$ increase in intensity. This result confirms that the mild polymerization temperature has no obvious influence on the IL structure except that the vinyl group has been polymerized. Although this experiment was carried out on the SSPIL alone, it suggests that the mild polymerization temperature used in some embodiments of the invention would not influence the IL structure except that the vinyl group has been polymerized.

**Figure 1d** shows the Raman spectra of pure CNTs and the CoSSPIL/CNT composites of example 1. No significant shift or peak shape changes of the CNTs are observed before and after the formation of PIL, which means that no electron perturbation of the graphite pi electrons is evoked by the introduction of the IL polymer. XPS results of different samples from comparative example 3 and example 1 confirmed this result: all the C1s main peaks belong to the graphitic carbon of the CNTs and no shift or obvious change occurs with the variation of PIL content (**Figure 3**). Returning to the Raman spectra, the inset in **Figure 1d** shows the spectrum for Co species of the CoSSPIL/CNT-1 sample of example 1. The main peaks of the Co species at 699.9 $cm^{-1}$ and 463.5 $cm^{-1}$ identified in this figure can be attributed to tetrahedrally and octahedrally coordinated $Co^{2+}$, respectively.

Aberration-corrected scanning transmission electron microscopy was utilized to examine the fine structure of CoSSPIL/CNT of example 1. The ADF-STEM image shown in **Figure 4a** clearly reveals a good dispersion of Co atoms over the surface of CNT. Due to their higher atomic number, Co atoms appear as bright dots. In addition to single atoms, sparse Co clusters were observed on CNT (inside dotted line of **Figure 4a** marked as *cluster*). Without wishing to be bound by theory, this may be due to the aggregation of IL polymer during the polymerization process.

A composition analysis was also performed on samples of the material of example 1, as shown in **Figure 4c.** The EDX spectrum displays C, N, O, S and Co elements, confirming the presence of the PIL and Co in the sample. Furthermore, the XRD pattern of the CoSSPIL/CNT of example 1 shows only CNT characteristic peaks (**Figure 5**). This also demonstrates that both PIL and Co species are well distributed on the CNT surfaces and that minimal agglomeration happens during the fabrication process.

To confirm whether the IL delivers an improvement of the metal catalyst in OER as in liquid phase catalysis, different samples were synthesized in example 1 by varying the IL precursor/$CoCO_3$ ratio to 0.5, 1, 1.5, 2 and 2.5 respectively.

NEXAFS spectra of the different samples of example 1 are given in **figure 4d.** The L3 edge between 775 eV and 785 eV of the spectra has previously been identified as an indication of the promotion of Co 2p core electrons to unoccupied 3d orbitals of $Co^{2+}$ [$2p^63d^7 \rightarrow d2p^53d^8$ for Co(2+)] (see Journal of Physics: Condensed Matter 1993, 5, 2277). The first peak of CoSSPIL/CNT-0.5 (777.3 eV, black vertical line) can be attributed to the t2g-hole (see J. Am. Chem. Soc. 2016, 138, 11017-11030) which exists only in an octahedral environment of $Co^{2+}$. With the increase of PIL content in CoSSPIL/CNT-1 of example 1, the t2g-hole signal decreases. This indicates the configuration of the $Co^{2+}$ transfer from the 6-coordinated octahedral structure (splitting energy, 10 Dq) to the 4-coordinated tetrahedron structure (splitting energy, 4.45 Dq). Meanwhile, the CoSSPIL/CNT-1.5 shows a pure tetrahedron configuration which has 3 half-full eg orbitals. Thus, the increase in the ratio of IL/$CoCO_3$ reduces t2g and eg splitting; the $Co^{2+}$ ions form weak Co-ligand bonds which introduce high spin states. This might cause an easy oxidation of $Co^{2+}$ to higher valence during the

reaction.

For the OER measurements, a film of as-synthesized CoSSPIL/CNT-1 was dropcoated onto a glassy carbon (GC) electrode as described in example 15. As reference points, the same measurements for CNT, SSPIL/CNT, $Co_3O_4$/CNT (50% by weight of $Co_3O_4$) and $CoCO_3$ samples were also performed.

The Ru of the system was determined as 35 Ω for all samples by EIS, **Figure 6.** Commercial $CoCO_3$ has much higher resistance than the CNT containing samples (**Figure 7**)**.** Without wishing to be bound by theory, CNT containing samples may have lower resistance due to the excellent conductivity of the CNTs, which implies CNTs are not only the support for different samples, but also endow the catalytically active material with conductivity for catalyzing the reaction. The introduction of PIL in SSPIL/CNT of comparative example 3 and CoSSPIL/CNT-1 of example 1 does not increase the resistance.

**Figure 8a** and **figure 9** show the polarization curves from various samples with and without iR-drop correction, respectively. The CoSSPIL/CNT of example 1 shows a much better OER activity than the other two Co containing samples of comparative example 1 ($Co_3O_4$/CNT) and $CoCO_3$, even though the Co content of example 1 is much lower. Without wishing to be bound by theory, this may be due to the high dispersion of the Co species. The comparison between CNTs and the SSPIL/CNT of comparative example 3 confirms that the PIL without the Co shows almost no improvement in OER over the CNT sample.

The key performance indicators (KPI) of electrochemistry data of the CoSSPILCNT-1 sample are given in the following Table 1.

Table 1. The key performance indicators (KPI) of electrochemistry data of the CoSSPILCNT-1 sample of example 1. 10 μg of this catalytically active material was used in the experiments. It had a geometric area of 0.19625 $cm^{-2}$. The electrolyte used was 0.1 M KOH, which has a pH of 13.

| **OCP** | **Ru** | | **Initial EIS measurement** | |
|---|---|---|---|---|
| 0.924 $V_{RHE}$ | 35 Ω | | | |
| **E2mA/cm²** | **E5mA/cm²** | **E10mA/cm²** | **Initial activity measurement** | |
| 1.60 $V_{RHE}$ (auto iR-drop) | 1.62 $V_{RHE}$ (auto iR-drop) | 1.64 $V_{RHE}$ (auto iR-drop) | | |
| $J_{m,1.6V}$ | $J_{m,1.7V}$ | $J_{m,1.8V}$ | **Mass activity in mA/μg** | |
| 0.020 | 0.17 | 0.37 | | |
| **J t=0 h** | **J t=0.5 h** | **J t=2 h** | **Stability at 1.8 $V_{RHE}$** | |
| 16.3 mA/cm² | 20.2 mA/cm² | 19.9 mA/cm² | | |
| **OCP** | **Ru** | | **Second EIS measurement** | |
| 0.901 $V_{RHE}$ | 35 Ω | | | |
| **E2mA/cm²** | **E5mA/cm²** | **E10mA/cm²** | **Second activity measurement** | |
| 1.61 $V_{RHE}$ (auto iR-drop) | 1.63 $V_{RHE}$ (auto iR-drop) | 1.66 $V_{RHE}$ (auto iR-drop) | | |
| $J_{m,1.6V}$ | $J_{m,1.7V}$ | $J_{m,1.8V}$ | **Mass activity in mA/μg** | |
| 0.020 | 0.15 | 0.32 | | |

$$\mathrm{TOF}\ (\mu = 400\ \mathrm{mV}) = \frac{Current/4F}{Molar\ active\ sites} = \frac{1.17\ mA/_{4*96485\ S\ A/mol}}{0.0106\ \mu\ mol} = 0.29\ \mathrm{s}^{-1}$$

Due to the atomic dispersion of the sample, all Co can be seen as active sites. A relative turnover frequency (TOF) of 0.29 is obtained at overpotential 400 mV. This is even comparable with some homogeneous catalysts (see Science 2010, 328, 342-345, and J. Am. Chem. Soc. 2009, 131, 2768).

To confirm the influence of the amount of IL on the cobalt activity for the OER, different samples of example 1 having molar ratios of CoSSPIL/CNT of 0.5, 1, 1.5, 2 and 2.5 were measured. Conditionings were done by 30 cycles at 100 mV from 0 $V_{RHE}$ to 1 $V_{RHE}$ for the different samples to avoid a harsh potential jump and stress on the working electrode. As shown in **Figure 10,** the capacitance decreases with increasing IL/Co ratio. Without wishing to be bound

by theory, the increased amount of IL will decrease the BET surface area: the higher the IL content, the lower the BET surface area, which explains the lower capacitance.

Compared with pristine CNT, all the IL containing samples show more tilted current/potential curves. The introduction of the IL might increase the ion conductivities of the relative composites. Ion conductivity is a fundamental property of PILs. Ohno et al. found that the polymerization of IL generally lowers the ionic conductivity, but there are still some mobile ions after covalent bonding of the polymerizable groups which can still provide relative ionic conductivity of the formed IL polymer (see Electrochim. Acta 2006, 51, 2614-2619, and Macromol. Symp. 2007, 249, 551-556). The CV from 1 $V_{RHE}$ to 1.4 $V_{RHE}$ (**Figure 11**) shows a Co activation process of the CoSSPIL/CNT series of example 1. The relative oxidation peak of $CoCO_3$ cannot be observed due to the low capacitance.

The resistance of the CoSSPIL/CNT series of example **1** has no clear relationship with the content of the PIL (see **Figure 6**)**,** but as shown in **figure 8b,** the activity of per unit Co does improve with the increase of the PIL content.

**Figure 8c** shows a good linear relationship between Co activity (the current at 1.8 $V_{RHE}$ without iR-drop correction) and PIL content (IL precursor/$CoCO_3$ molar ratio from 0.5-2.5) with R-squared 0.995 for the material of example 1. This result demonstrates that the introduction of PIL not only improves the dispersion of Co on CNT surface, but can also enhance the catalyst activity in the OER. NEXAFS spectra of the different samples of example 1 in **figure 4d** confirmed this. The influence of the electronic structure and configuration structure of Co species by ionic structure of PIL delivers the linear improvement in activity shown in **figure 8c** as the ratio of IL precursor/$CoCO_3$ increases from 0.5 to 2.5 in example 1. Without wishing to be bound by theory, this improvement of the activity might be caused by the charge transfer between Co and IL.

Other than high activity, long-term stability is another critical parameter that determines the practicability of electrocatalysts. To assess this, chronoamperometric (CA) measurements were performed by maintaining the constant potential at 1.8$V_{RHE}$ for 2 hours (**Figure 8d**)**.** All the CoSSPIL/CNT samples of example 1 except the CoSSPIL/CNT-2.5 sample survived two hour measurement without any loss of current, demonstrating the good durability of the new material.

Inductively coupled plasma optical emission spectrometry (ICP-OES) was used to detect the trace cobalt in the electrolyte after the CA test and no cobalt was detected. The OER measurements exhibit good stability because the PIL ligand shows no solubility in water thus keeping the counter Co ions stable on the CNT surfaces during the reaction. Additionally, compared with organic ligands, ILs are more stable at the relevant oxidation potentials due to their wide electrochemistry window.

When an excess of PIL are present on the CNT surfaces, the excess PIL aggregates form large polymer/CNT agglomerates. This material then exhibits poor dispersion in the ink which leads to a bad dropcoating layer on the glassy electrode. Therefore, the detachment of the CoSSPIL/CNT-2.5 sample of example 1 from the electrode to form black particles in the electrolyte was observed during the CA test, leading to the decrease of the current of the curve for this sample in **figure 8d.** Therefore, although the increase of the IL/Co ratio from 0.5 to 2.5 is favorable for the Co activity in OER because better activities can be obtained (see **Figure 8c**)**,** the IL content is preferably not increased without limitation due to the dispersibility of PIL in the ink. Apart from this, the tangled PIL on the CNT surface acts as a stable counter ion and ligand of Co and stabilizes the cobalt ions during the reaction.

The effect of polymerisation on the stability of the catalysts was also investigated. In particular, the stability of samples comprising the product of the polymerization process of example 1 (CoSSPILCNT) were compared with the sample which had not undergone polymerisation (CoSILCNT) of example 2. The stability of the catalysts was investigated by CA measurements and the results are shown in **Figure 12.** The polymerized catalyst of example 1 is stable over 2h whereas the Co ions in the unpolymerized sample of example 2 gradually detach during the process. This has been proven by the ICP-OES technique discussed above. Therefore, the polymerization step further enhances the stability of the system and makes the catalytically active material suitable for harsher conditions and use in the catalysis of a wider variety of reactions.

It has previously been demonstrated that a uniform distribution of metal nanoparticles can be dispersed on an electron-conducting multi-walled CNT surface using a PIL, which introduces a large number of surface functional groups onto the CNTs (Angew. Chem. Int. Ed. 2009, 48, 4751-4754). These structures showed good activity. However, **Figure 13** shows that the use of atomically dispersed metal species according to the present invention leads to improved activity properties relative to nanoparticles.

In particular, with involvement of the PIL in the catalytically active material, the activity of the nanoparticle metal oxide ($Co_3O_4$SSPIL/CNT) of comparative example 5 is improved relative to the corresponding catalytically active material without PIL ($Co_3O_4$/CNT) of comparative example 1. This proves that the IL can also influence the reaction environment of the nanoparticle metal oxide. However, the atomically dispersed Cobalt sample (CoSSPIL/CNT) of example 1 has even better activity, as shown by the data in **figure 13** which is summarized in the following table 2.

Table 2 compares the j/mA $cm^{-2}_{geom}$ at $E/V_{RHE}$ 1.8 V for a comparative Examples 1 and 5 and also example 1. The table reveals that when atomically dispersed metal species are used, a higher j/mA $cm^{-2}_{geom}$ at $E/V_{RHE}$ 1.8 V is achieved, indicating higher activity.

| Sample | Example | Atomically dispersed? | j/mA $cm^{-2}_{geom}$ at $E/V_{RHE}$ 1.8 V |
|---|---|---|---|
| $Co_3O_4$/CNT | Comparative example 1 | No | 6.1 |
| $Co_3O_4$PIL/CNT | Comparative example 5 | No | 7.4 |
| CoPIL/CNT | Example 1 | Yes | 20.3 |

The use of the atomically dispersed metal species achieves several advantages: one is the better dispersion, which means that more IL is involved in the reaction, which delivers a better activity. The other advantage is that the atomic dispersion of active Co sites means that more are reachable by the electrolyte, which leads to a higher efficiency.

A variety of carbon materials can be used in the invention as shown by Examples 3 to 5. Catalytically active material comprising atomically dispersed metal species dispersed in an IL on the surface of graphene, OLC, and HTC were formed, and were found to have similar properties to the catalytically active material described above. This is evident from the data in **Figure 14,** which indicates that good activity of catalytically active material is achieved for compositions comprising graphene, CNT and OLC. The activity is particularly high for compositions comprising OLC.

A variety of ILs can be used in the invention as shown by Examples 6 to 8. Catalytically active material, comprising atomically dispersed metal species dispersed in $OmimBF_4$, $OmimPF_6$, and $OeimPF_6$ on the surface of a carbon material having sp2 hybridization were formed, and were found to have similar properties to the catalytically active material described above. As shown in figure 15, good activity is obtained for Co($OmimBF_4$)/CNT (example 6), Co($OmimPF_6$)/CNT (example 7); and Co($OmimHSO_4$)/CNT (Example 9). This activity is highest for Co($OmimBF_4$)/CNT and Co($OmimPF_6$)/CNT.

ILs are good solvents, they can dissolve almost all inorganic structures to involve them in the homogeneous dispersion of the invention. As a result, a variety of atomically dispersed metal species can be used in the invention, as demonstrated by Examples 10 to 14. Catalytically active material comprising atomically dispersed lithium (example 10), zinc (example 11), iron (example 12), manganese (example 13), and nickel (example 14) dispersed in an IL on the surface of a carbon material having sp2 hybridization were formed, and were found to have similar properties to the catalytically active material described above. As shown in figure 16, catalytically active materials comprising Nickel, Cobalt, Iron, Manganese and Zinc all showed activity. Higher activity is achieved with Nickel, Cobalt and Iron, and Nickel showed the best activity.

In addition to the OER reaction described above, the catalytically active material of the invention may be used to catalyze the ORR and oxygen oxidation reactions. In particular, the catalytically active material of the invention was used in the ORR reaction as shown in **Figure 17,** and also the phenol oxidation and sulfur-containing compound oxidation reactions.

In summary, the invention relates to a scalable method to immobilize atomically dispersed metal species on the surface of carbon materials having sp2 hybridization. During the synthesis process, ILs were tangled and bonded on carbon materials, providing coordination sites for the metal species. The formed catalytically active materials may be used to catalyse the OER, the ORR, and oxidation reactions, and show good activities and stabilities. The singly dispersed metal species show a high utilization efficiency during the reaction; the IL not only bonds the metal species, ensuring a good distribution on carbon surfaces, but also modifies the electronic structure of the metal species to significantly enhance the catalytic activity; the stably fixed counter charges on the CNT surface provided by the IL solve the dynamical instability of the metal species as a catalyst. Furthermore, the good electron conductivity of CNTs makes them a favorable support for OER. Finally, the catalytically active material is very flexible since it can be made from a wide range of ILs, on a range of carbon surfaces, with a range of metal species, and can be used to catalyze many different reactions.

## EXPERIMENTAL PART

### Electrochemical procedure

Electrochemical measurements comprise conditioning of work electrode, measurement of the OCP, impedance spectroscopy (determination of iR-drop, CV, "activity") and constant-potential chronoamperometry (CA, "stability"). All the procedures were carried out in 0.1 M KOH. The electrochemical measurements were conducted in a three electrode

system, which was controlled by using a potentiostat/galvanostat (BioLogic VSP, France). A platinized Pt wire as a counter electrode and a RHE of the type HydroFlex, from Gaskatel GmbH as a reference electrode were used.

**Conditioning**

This part of the procedure consists of the determination of the OCP for 60 s and a subsequent linear sweep from the OCP to 1 $V_{RHE}$ (5 mV/s) to avoid a harsh potential jump and stress on the working electrode. Conditioning is done by 50 cycles at 100 mV/s from 0 $V_{RHE}$ to 1 $V_{RHE}$.

**Impedance spectroscopy (determination of iR-drop)**

The uncompensated resistance (Ru, iR-drop) of the system is determined by EIS at the OCP. The first step is the determination of the OCP (for 60 s). EIS is carried out at the OCP: 25 data points between 100 kHz and 10 Hz with an amplitude of 10 $mV_{RMS}$.

**Cyclic voltammetry ("activity measurement")**

The cell remains switched on after EIS and the potential is swept from the OCP to 1 $V_{RHE}$ (5 mV/s). Before the start of the CV, the electrode is set to rotate at 1600 rpm. Cyclic voltammetry is conducted from 1 $V_{RHE}$ to 1.8 $V_{RHE}$ at 5 mV/s with automatic iR-compensation using Ru from impedance spectroscopy. The Ru is the same as the iR-drop.

**Chronoamperometry (CA)**

To perform a stability test in chronoamperometric mode, the potential is kept at 1.8 $V_{RHE}$ after stationary polarization for two hours.

**Characterizations**

ATR-infrared was performed on a Fourier transform infrared spectrometer (Thermo Scientific® Nicolet iS50).

Raman spectra were measured by a Thermo Scientific DXR Raman Microscope with a 50x magnification and a 532 nm laser.

The XPS and NEXAFS experiments were performed at the ISISS beamline at the synchrotron radiation facility BESSY II of the Helmholtz Zentrum Berlin. All measurements were carried out in a stainless steel NAP-XPS chamber, the details of which are described in Advances in Catalysis, Vol. 52, 2009, pp. 213-272. The powder samples were pressed into a pellet of 8 mm diameter. Samples were placed between a stainless steel backplate and lid (with 6 mm hole) and mounted onto a sapphire sample holder. The overall spectral resolution was 0.2 eV in the C 1s region.

For the XPS data in **Figure 1a** (SSPIL/CNT samples of comparative example 3) and Figure 2 (SSPIL/CNT samples of comparative example 3 and SSIL/CNT of comparative Example 4) the catalytically active material was investigated as pressed pellets. XPS spectra were recorded using non-monochromatized Al K$\alpha$ (1486.6 eV) excitation and a hemispherical analyzer (Phoibos 150, SPECS). The binding energy scale was calibrated by the standard Au4f(7/2) and Cu2p(3/2) procedure. +5V and -5V bias was applied to the samples, to understand whether or not all spectral features undergo the rigid shift. Spectral acquisition was carried out in standard (sample grounded) state and also upon applying positive and negative 5V bias.

The aberration-corrected ABF-STEM and ADF-STEM image were observed with a double Cs-corrected JEOL ARM 200 transmission electron microscope with a cold field emission gun. The instrument was operated at 200kV.

X-ray diffraction patterns were recorded in Bragg-Brentano geometry on a Bruker AXS D8 Advance II theta/theta diffractometer, using Ni filtered Cu K$\alpha$ radiation and a position sensitive energy dispersive LynxEye silicon strip detector at a scanning rate of 41.2°/min.

The NEXAFS spectra were obtained by recording the total electron yield (TEY). The energy resolution of the monochromator in the range of the Co L-edge was 0.3 eV. The energies were calibrated using the C 1s first and second order peaks. The accuracy of energy calibration was estimated to be around 0.1 eV.

**Removal of amorphous carbon and residual metal on CNT :**

CNT produced by Shandong Dazhan Nano Materials Co. is multi-walled CNT with an average diameter of about 12.9 nm. The first step is washing it with nitric acid: 20 g of multiwalled CNTs (MWCNT) were mixed with 1000 ml of nitric acid (68 wt%), stirred and heated up under reflux at around 100 °C for 20 h. After the reaction, the gaseous supernatant was purged with nitrogen to remove acidic vapor for better handling. The material was filtered and washed

extensively in a washing cell overnight with distilled water to remove residual acid and impurities like iron. After that, the black wet CNT was dried in a drying oven at 100 °C for 20 h. The as-obtained CNT powder then was annealed in a furnace at 1000 °C for 20 h (under argon).

**Comparative example 1: Synthesis of $Co_3O_4$/CNT**

50 mg of the pre-cleaned CNT obtained above was dispersed in 2 mL iso-propanol and sonicated for 5 min to form a first dispersion. 50 mg of commercial $Co_3O_4$ nanoparticles (99.5%, Sigma-Aldrich) was dispersed in 1 mL $H_2O$ and sonicated for 5 min to form a second dispersion. Then the two dispersions were mixed together. The mixture was sonicated until the solvents had been completely removed, i.e. when the liquid phase can no longer be observed. The as-obtained wet $Co_3O_4$/CNT was then transferred and dried at 80 °C overnight to obtain the final product.

**Comparative example 2: Synthesis of SSPIL**

SSPIL was synthesized using a thermal-initiation free radical polymerization method from IL monomer 1-butanesulfonate-3-vinyl imidazolium hydrogen sulfate (SSIL 99%, Shanghai Chengjie Chemical Co., Ltd, IL precursor hereinafter). Temperature programmed annealing processes were carried out according to the following procedures: annealing the IL precursor from room temperature to 40 °C (Argon, 20 min), maintaining for 5 h to remove the air in the furnace tube; then heating to 190 °C in 60 min, and maintaining this temperature for 20 h.

**Comparative example 3: Synthesis of SSPIL/CNT**

36 mg IL precursor was dissolved in 1 mL water and 50 mg CNT was dispersed in 3 mL iso-propanol (IPA). The two solutions then were mixed and stirred until the solvent was removed. The polymerization process was the same as applied for the synthesis of SSPIL.

**Comparative example 4: Synthesis of SSIL/CNT**

36 mg IL precursor was dissolved in 1 mL water and 50 mg CNT was dispersed in 3 mL iso-propanol (IPA). The two solutions then were mixed and stirred until the solvent was removed to deliver SSIL/CNT.

**Comparative example 5: Synthesis of $Co_3O_4$SSPIL/CNT**

25 mg of $Co_3O_4$ nanoparticles as defined in comparative example 1 above and 30 mg SSPIL/CNT were first mixed in 2 mL IPA. The mixture then was sonicated until all the solvent was removed. The hybrids were then heated in an oven at 80 °C overnight to get $Co_3O_4$SSPIL/CNT.

**Example 1: Synthesis of CoSSPIL/CNT series**

14 mg cobalt carbonate (99.9%, Sigma-Aldrich) and 36 mg IL monomer 1-butanesulfonate-3-vinyl imidazolium hydrogen sulfate (the molar ratio of Co and IL was around 1: 1 with a small excess of IL) was mixed in 1 mL water and heated at 50°C to react for 60 min to obtain a "first composition".

50 mg CNT processed as described in the section "Removal of amorphous carbon and residual metal on CNT" above was dispersed in 3 mL IPA by sonication to obtain a "second composition".

The first composition was added dropwise to the second composition. The resultant mixture was stirred until the solvent was totally removed. The dried black hybrid was then placed in small quartz boats in the center of a larger alumina tube running through the center of a furnace. Temperature programmed annealing processes were carried out according to the following procedure: annealing the hybrid from room temperature to 40 °C (Argon, 20 min), maintaining for 5 h; then heating it to 190 °C in 60 min, and maintaining for 20 h.

The final products were obtained and named as CoSSPIL/CNT. The following samples were obtained under the same conditions, with varied amounts of IL precursor. In the following, the number following - denotes the molar ratio of the IL precursor to the Co.

CoSSPIL/CNT -1,
CoSSPIL/CNT-0.5 (18 mg IL precursor used)
CoSSPIL/CNT-1.5 (54 mg IL precursor used)
CoSSPIL/CNT-2 (72 mg IL precursor used), and
CoSSPIL/CNT-2.5 (90 mg IL precursor used).

**Example 2: Synthesis of CoSIL/CNT**

14 mg cobalt carbonate (99.9%, Sigma-Aldrich) and 30 mg IL monomer 1-butane-3-methyl imidazolium hydrogen sulfate (SIL, purchased from Shanghai Chengjie Chemical Co., Ltd (China)) were mixed in 1 mL water and heated at 50°C to react for 60 min to obtain a "first composition".

50 mg CNT processed as described in the section "Removal of amorphous carbon and residual metal on CNT" above was dispersed in 3 mL IPA by sonication to obtain a "second composition".

The first composition was added dropwise to the second composition. The resultant mixture was stirred until the solvent was totally removed to get CoSIL/CNT.

**Examples 3 to 5: Different carbon materials: FeSSPIL/Graphene; FeSSPIL/OLC; FeSSPIL/HTC)**

**Synthesis of HTC:**

30 mL of a 20 wt % glucose solution was prepared in aqueous solution. The solution was acidified to the desired pH 6. After the hydrothermal treatment in Teflon-lined autoclaves heated in a heating block system to 220 °C for 6 h, the autoclaves were taken out of the heating device and were allowed to cool down over night. The solid product was filtered and washed with water thoroughly. The solid product was dried in vacuum at 60 °C overnight. This product was named HTC.

The HTC was removed to small quartz boats which were placed in the center of a larger quartz tube running through the center of a furnace. Temperature programmed annealed processes were carried out according to the following procedures: annealing the hybrid from room temperature to 60 °C (Argon, 20 min), maintaining for 2 h; then heating it to 900°C at the heating speed of 10 K/°C, maintaining for 5 h. The final products were obtained and named as HTC900.

Graphene was obtained from The Sixth Element (Changzhou) Materials Technology. The OLC was obtained by annealing nanodiamond at 1500 °C for 4 hours under argon. 50 mg graphene, onion like carbon (OLC), and annealed hydrothermal carbon (HTC900) were first separately dispersed into 3 mL IPA by sonication.

14 mg cobalt carbonate (99.9%, Sigma-Aldrich) and 36 mg IL precursor (the molar ratio of Co and IL was around 1: 1 with a small excess of IL) was mixed in 1 mL water and heated to react for 60 min. Such a mixture was added dropwise to each of the carbon IPA mixtures. The mixtures were stirred until the solvent was totally removed. Then the dried black hybrids were removed to small quartz boats which were placed in the center of a larger alumina tube running through the center of a furnace. Temperature programmed annealed processes were carried out according to the following procedures: annealing the hybrid from room temperature to 40 °C (Argon, 20 min), maintaining for 5 h; then heating it to 190 °C in 60 min, and maintaining it for 20 h.

The final products were obtained and named as FeSSPIL/Graphene (example 3), FeSSPIL/OLC (example 4), and FeSSPIL/HTC (example 5).

**Examples 6 to 9: Different IL (OmimBF$_4$, OmimPF$_6$, OeimPF$_6$, OmimHSO$_4$)**

50 mg CNT processed as described in the section "Removal of amorphous carbon and residual metal on CNT" above was first dispersed into 3 mL IPA by sonication.

14 mg cobalt carbonate (99.9%, Sigma-Aldrich) and OmimBF$_4$, OmimPF$_6$, OeimPF$_6$, or OmimHSO$_4$ (the molar ratio of Co and IL is around 1: 1 with a little bit excess IL, all the IL were purchased from Shanghai Chengjie Chemical Co., Ltd (China)) was mixed in 1 mL water and heated to react for 60 min. The mixture was added dropwise to the carbon IPA mixture. The mixture was stirred until the solvent was totally removed. Then the dried black hybrid was put in the oven at 80 °C overnight to be dried.

The final products were obtained and named as Co(OmimBF$_4$)/CNT (example 6), Co(OmimPF$_6$)/CNT (example 7); Co(OeimPF$_6$)/CNT (example 8) and Co(OmimHSO$_4$)/CNT (Example 9).

**Examples 10 to 14: Different metal species (lithium, zinc, iron, manganese, nickel)**

Lithium hydroxide (5 mg), zinc acetate (18.3 mg), iron acetate (17.4 mg), manganese acetate (16 mg) and nickel acetate (24.9 mg) are used as metal precursors (99.9%, Sigma-Aldrich) to mix with 36 mg IL monomer 1-butanesulfonate-3-vinyl imidazolium hydrogen sulfate (the molar ratio of metal and IL was around 1: 1 with a small excess of IL) and heated to react for 60 min to obtain the "first compositions", respectively.

50 mg CNT processed as described in the section "Removal of amorphous carbon and residual metal on CNT" above was dispersed in 3 mL IPA by sonication to obtain a "second composition".

The first compositions were added dropwise to the second composition. The resultant mixture was stirred until

the solvent was totally removed. The dried black hybrid was then placed in small quartz boats in the center of a larger alumina tube running through the center of a furnace. Temperature programmed annealing processes were carried out according to the following procedure: annealing the hybrid from room temperature to 40 °C (Argon, 20 min), maintaining for 5 h; then heating it to 190 °C in 60 min, and maintaining for 20 h.

The final products were obtained and named as LiSSPIL/CNT (Example 10), ZnSSPIL/CNT (example 11), FeSSPIL/CNT (example 12), MnSSPIL/CNT (example 13), and NiSSPIL/CNT (example 14).

**Example 15: Manufacture of coated electrodes**

**Pretreatment of electrodes**

The working electrode was a 5 mm Ø glassy carbon (GC) disk electrode in a polyetheretherketone sheath. Proper electrode pretreatment to get a mirror-like surface was done before every measurement. Before the first use, electrodes were sandpapered with decreasing roughness. Electrodes were polished with polishing paste ($Al_2O_3$ slurry; 1.0 $\mu$m and 0.05 $\mu$m) on a wet polishing cloth for 3-5 minutes, and rinsed thoroughly with water. No scratches were visible on the glassy carbon surface. Before drop-coating of catalyst, electrodes were ultrasonicated in absolute ethanol for 5 minutes, rinsed thoroughly with water, ultrasonicated in millipore water for 5 minutes, rinsed thoroughly with water and dried in an oven at 60 °C.

**Ink preparation**

The ink consists of 4 mL IPA, 960 $\mu$L $H_2O$ and 40 $\mu$L Nafion solution (binder) and 5 mg of the products from examples 1 - 11. These products were dispersed in the solvent by 15 min of ultrasonication. Proper dispersion yields a dispersion without any visible particles. The catalyst may precipitate from the dispersion over time. If any black precipitate can be seen, ultrasonication should be repeated. The ink is used as soon as possible after being taken out of the ultrasonic bath.

The same procedure was followed when forming an ink using the materials of the comparative examples and also $CoCO_3$ and CNT.

**Dropcoating**

Electrodes with 50$\mu$g/cm$^2$ loading were produced. A film of catalytically active material was dropcoated onto a glassy carbon (GC) electrode for different electrochemistry measurements in Ar-saturated 0.1 M KOH. To carry out the dropcoating, volumes of 5 $\mu$L were pipetted two times onto the pretreated GC electrodes at room temperature and dried for 0.5 hours at 60 °C with a light uniform film formed on the electrode surface.

**Claims**

1. A catalytically active material, comprising
atomically dispersed metal species on the surface of a carbon material,
wherein the atomically dispersed metal species are dispersed in an ionic liquid, and
wherein the surface of the carbon material comprises carbon atoms having sp2 hybridization.

2. The catalytically active material according to claim 1, wherein the atomically dispersed metal species comprise one or more species selected from the group consisting of: alkali metal species, alkaline earth metal species, and transition metal species, wherein the alkali metal species is preferably a Li species, the transition metal species are preferably selected from Sc, Ti, V, Cr, Mn, Fe, Co, Ni, Cu, Zn, Rh, Ru, Pt, and W species, and the transition metal species are most preferably selected from Mn, Fe, Co, Ni, Zn, and W species.

3. The catalytically active material according to claim 2, wherein the alkali metal species comprises a lithium ion, and the transition metal species comprises an Mn, Fe, Co, Ni, Zn, or W ion, and the transition metal species most preferably comprises a Co(II) ion.

4. The catalytically active material according to any of claims 1, 2, or 3, wherein the ionic liquid comprises an unsaturated bond, wherein the unsaturated bond is preferably present in a heterocyclic or heteroaromatic group, wherein the positive charge is located on one of the heteroatoms of the heterocyclic or heteroaromatic group, which heterocyclic or heteroaromatic group may be substituted with (i) an alkene substituent capable of being polymerised, preferably

a terminal alkene and/or (ii) an alkyl group having up to 10 carbon atoms, in which H may be replaced one or more times with a group capable of coordinating an atomically dispersed metal species, wherein the ionic liquid more preferably comprises a 1-alkylpyridinium cation, an *N-N*-dialkylpyrrolidinium cation, an alkylimidazolium cation, a 1-alkyl-3-vinyl imidazolium cation, a 1-alkyl-3-(vinylbenzyl)-imidazolium cation, a 1-butanesulfonate-3-vinyl imidazolium cation, a 1-octyl-3-ethyl imidazolium cation or a 1-Methyl-3-octylimidazolium cation.

**5.** The catalytically active material according to any of claims 1, 2, or 3, wherein the ionic liquid is

a) a polymerized ionic liquid,
b) preferably the product obtainable by polymerisation of an ionic liquid comprising an ion having an alkene substituent, which is preferably a terminal alkene,
c) more preferably the product obtainable by polymerisation of an ionic liquid comprising a 1-alkyl-3-vinyl imidazolium cation,
d) more preferably the product obtainable by polymerisation of an ionic liquid comprising a 1-butanesulfonate-3-vinyl imidazolium cation, and
e) most preferably the product obtainable by polymerisation of 1-butanesulfonate-3-vinyl imidazolium hydrogen sulfate.

**6.** The catalytically active material according to either of claims 4 or 5 a) - d), wherein the ionic liquid comprises a hexafluorophosphate anion, a tetrafluoroborate anion, a halide anion, a bistriflimide anion, and/or a hydrogen sulfate anion.

**7.** The catalytically active material according to any of claims 1, 2, 3, 4, 5, or 6, wherein the carbon material having sp2 hybridization on the surface comprises a fullerene, onion-like carbon, graphene, hydrothermal carbon, and/or graphite,
wherein the fullerene is preferably a carbon nanotube (CNT), and
wherein the CNT is preferably a multiwalled CNT having an average diameter of about 12.9 nm.

**8.** The catalytically active material according to any of claims 1, 2, 3, 4, 5, 6, or 7, which is suitable for catalyzing an oxidation reaction, the oxygen reduction reaction, or the oxygen evolution reaction.

**9.** Ink for coating electrodes comprising the catalytically active material according to any of claims 1, 2, 3, 4, 5, 6, 7, or 8.

**10.** An electrode coated with the catalytically active material according to any of claims 1, 2, 3, 4, 5, 6, 7, or 8.

**11.** An electrolyzer comprising an electrode coated with the catalytically active material according to any of claims 1, 2, 3, 4, 5, 6, 7, or 8.

**12.** A composition comprising atomically dispersed metal species dispersed in an ionic liquid.

**13.** Use of the catalytically active material of any of claims 1, 2, 3, 4, 5, 6, 7, or 8, the electrode of claim 10, or the electrolyzer of claim 11 for oxidation, for the reduction of oxygen, or for the electrochemical oxidation of water.

**14.** A process for making the catalytically active material of any of claims 1, 2, 3, 4, 5, 6, 7, or 8, comprising the steps:

I) atomically dispersing metal species in an ionic liquid to form a first composition, and
II) mixing the first composition with a carbon material having carbon atoms with sp2 hybridization on the surface.

**15.** The process according to claim 14, comprising the step of polymerizing the ionic liquid, wherein the polymerization step is preferably carried out by heating the first composition in step I, and/or wherein the polymerization step is preferably carried out by heating the mixture formed in step II.

**16.** The process of claim 14 or 15 wherein
the molar ratio of the IL/(metal species) in step I is in the range of 0.25 - 3, more preferably 0.4 - 2.4, more preferably 0.8 - 2.3, more preferably 1.4 - 2.2, more preferably 1.9 - 2.1, and is most preferably 2, and/or
in Step I) the ionic liquid comprises a solvent, and /or
Step I) includes a step of heating the first composition, wherein the heating step is preferably carried out at 40-120 °C for 0.2 to 4 hours, preferably for 0.5 to 2 hours, most preferably for 1 hour, and /or

Step I) includes a step of dispersing the carbon material having carbon atoms with sp2 hybridization on the surface in a solvent to form a second composition, and the mixing step in step II) comprises mixing the first and second composition, and/or
the first composition is added to the second composition in Step II), wherein the addition is preferably carried out dropwise, and/or
Step II) further comprises the step of removing the solvent(s), and/or
Step II) further comprises a heating step, which is preferably carried out at a temperature in the range of 30 - 50°C for 4 - 6 hours, before being heated in the range of 150°C - 250°C for 15 - 25 hours, and/or
wherein the process further comprises the steps of making an ink comprising the catalytically active material, coating the ink on an electrode, and drying the ink.

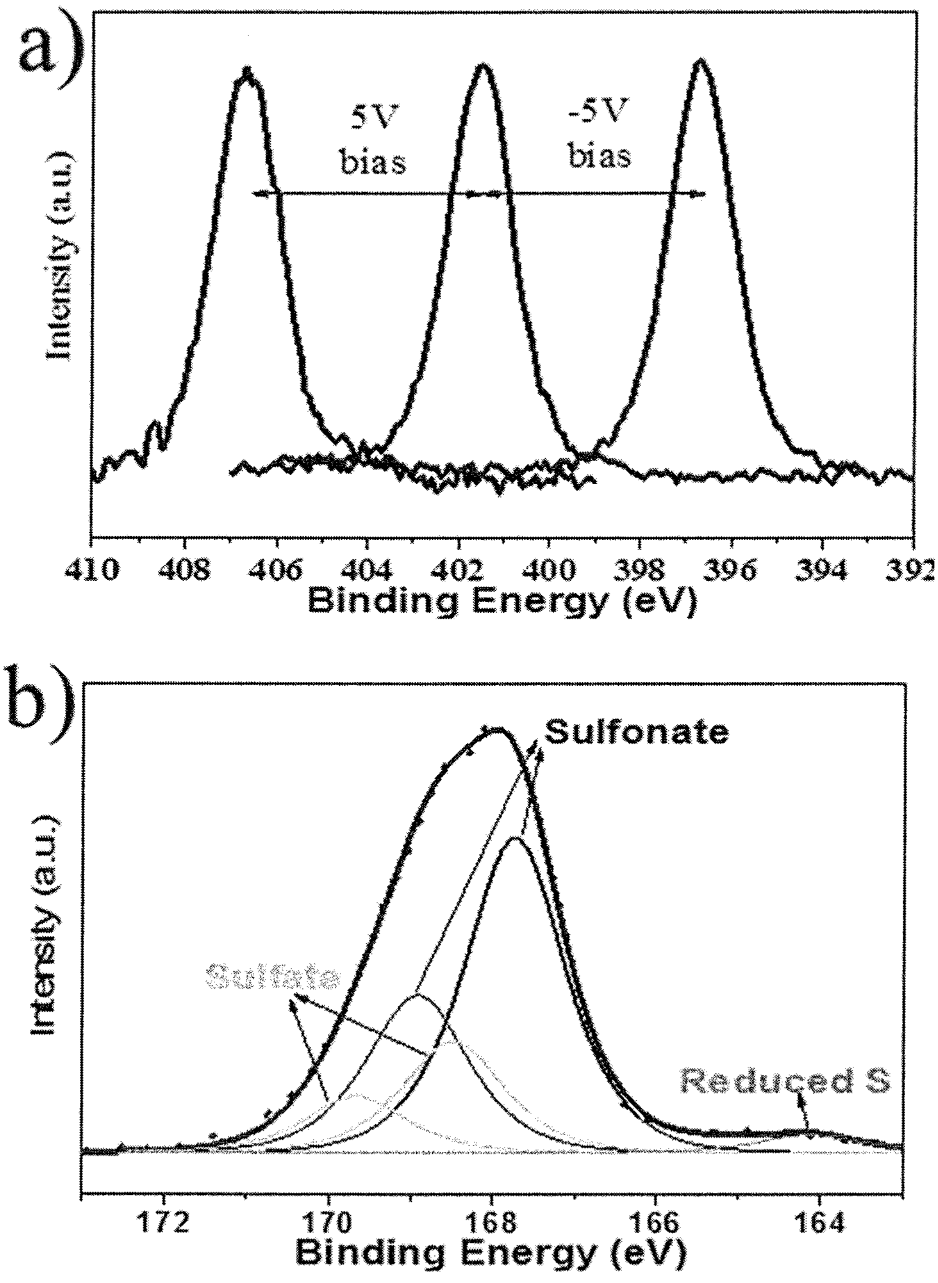
a)
5V
bias
-5V
bias
Intensity (a.u.)
410 408 406 404 402 400 398 396 394 392
Binding Energy (eV)
b)
Sulfonate
Sulfate
Reduced S
Intensity (a.u.)
172 170 168 166 164
Binding Energy (eV)

Fig. 1

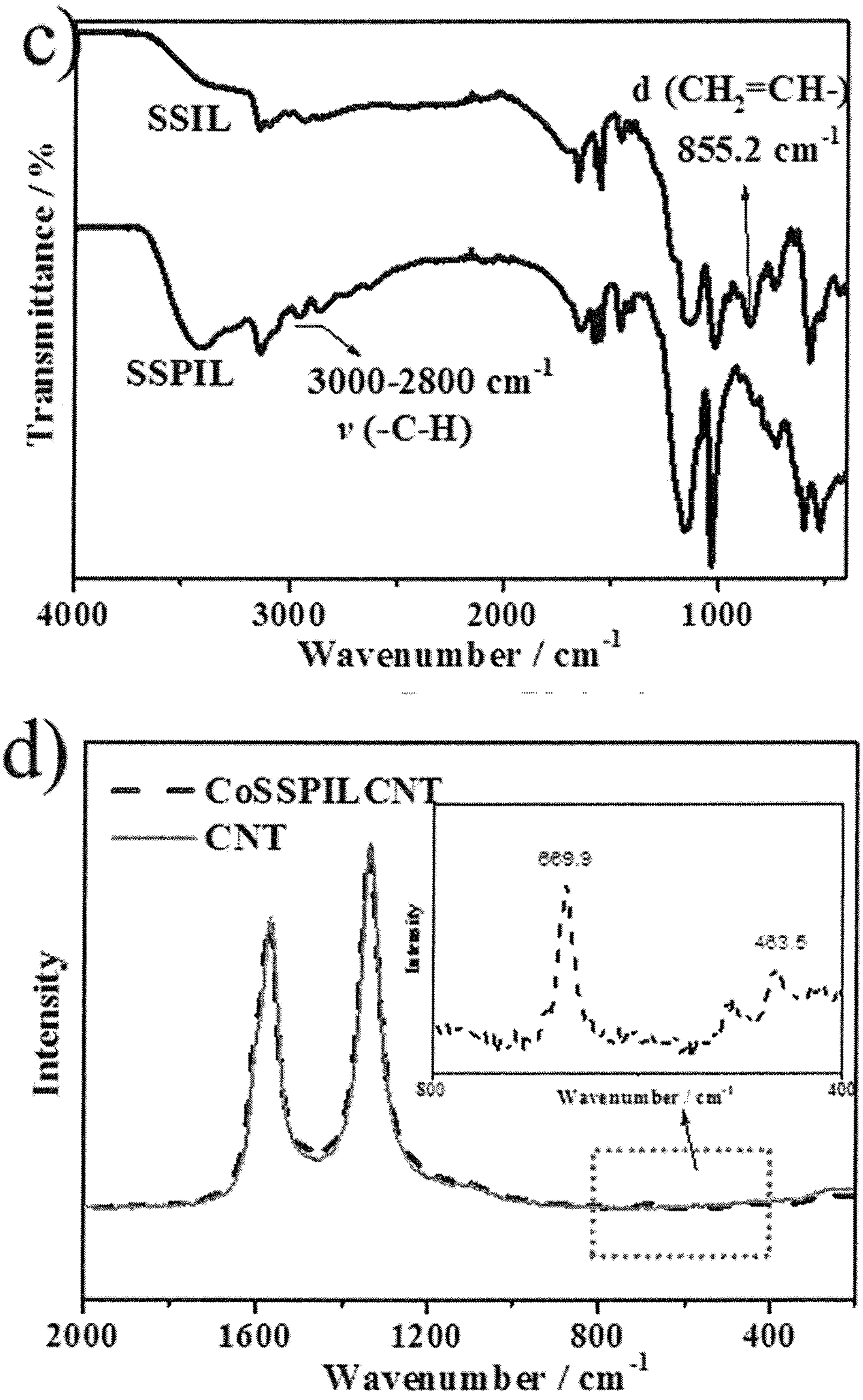
c)
SSIL
SSPIL
d (CH2=CH-)
855.2 cm-1
3000-2800 cm-1
v (-C-H)
Transmittance / %
4000
3000
2000
1000
Wavenumber / cm-1
d)
CoSSPILCNT
CNT
Intensity
869.9
463.5
Wavenumber / cm-1
2000
1600
1200
800
400
Wavenumber / cm-1

Figure 1.

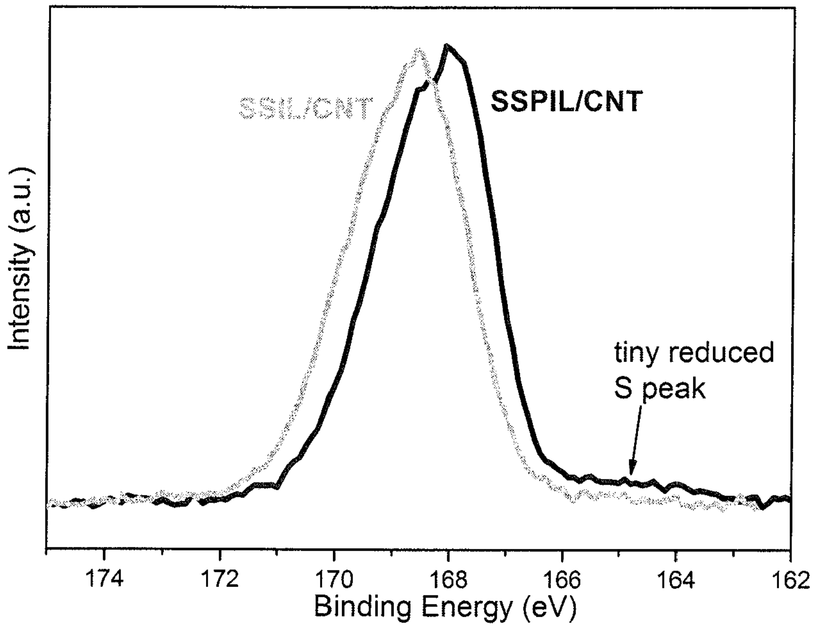


**Figure 2**

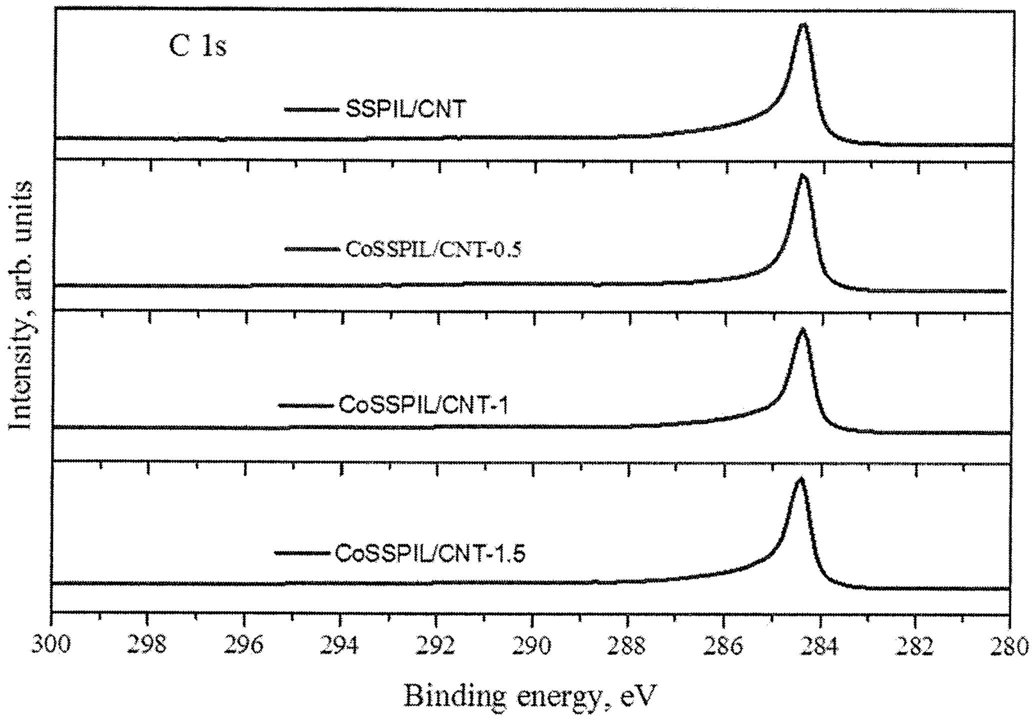


**Figure 3.**

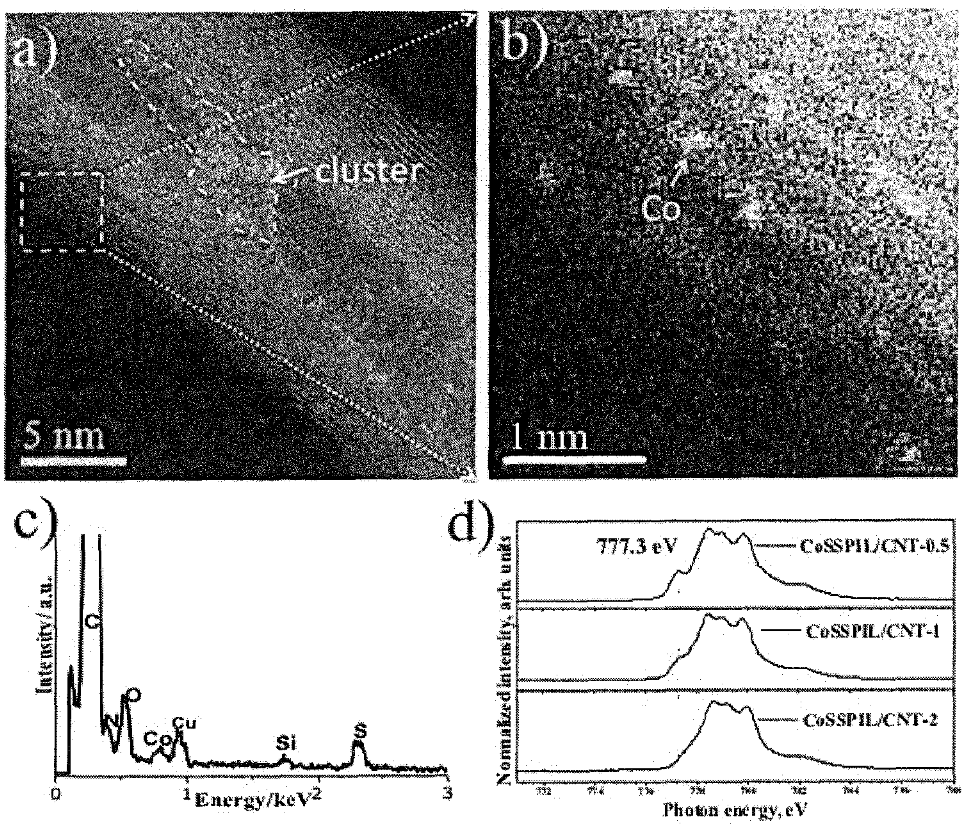


Figure 4.

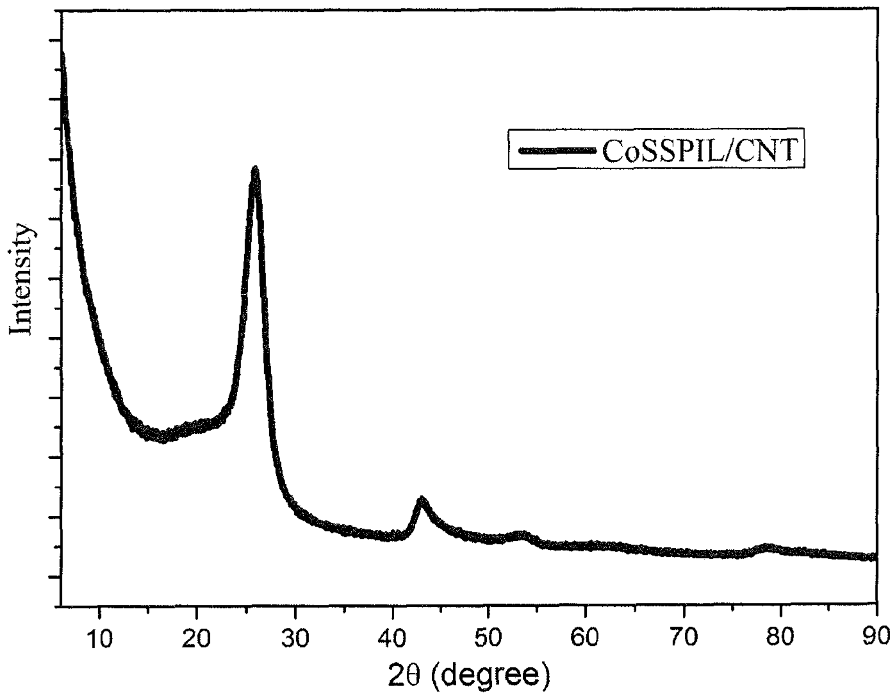


Figure 5.

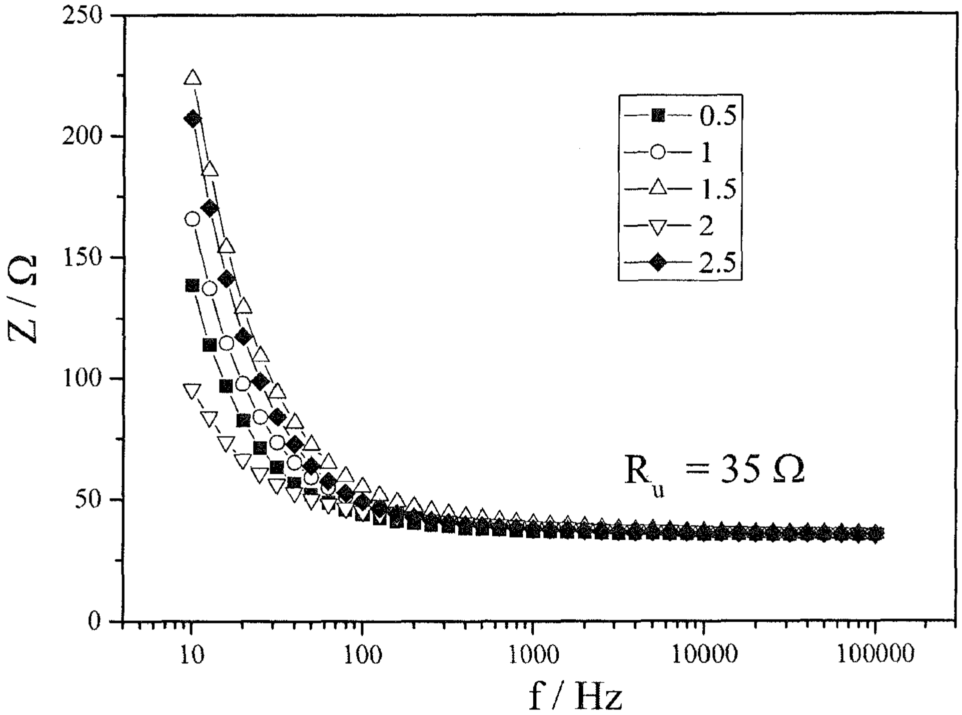


Figure 6.

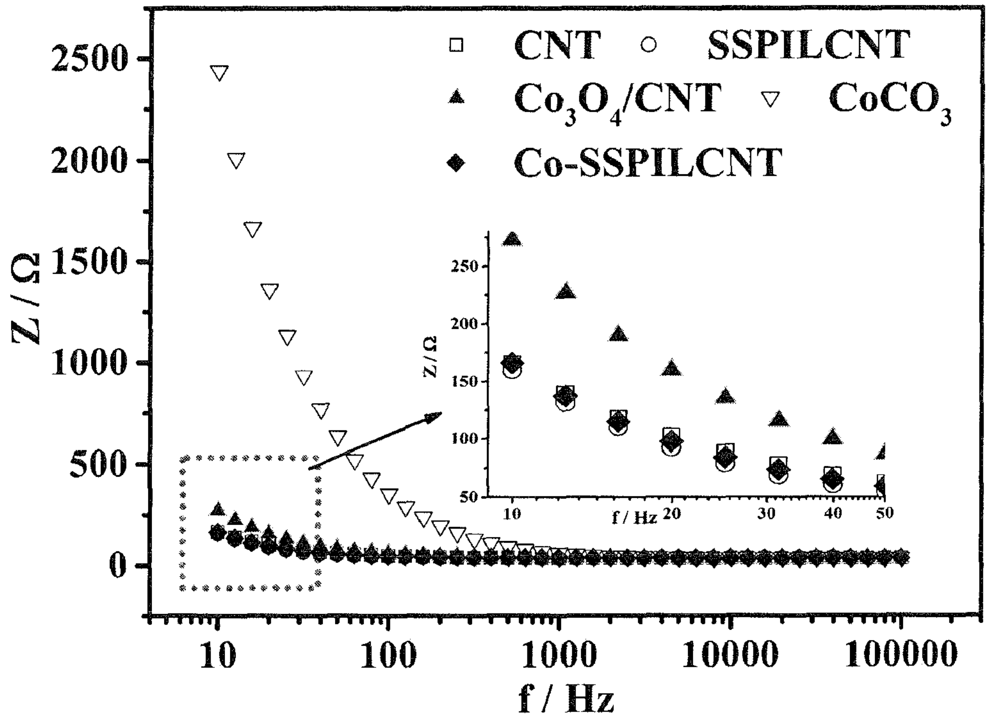


Figure 7.

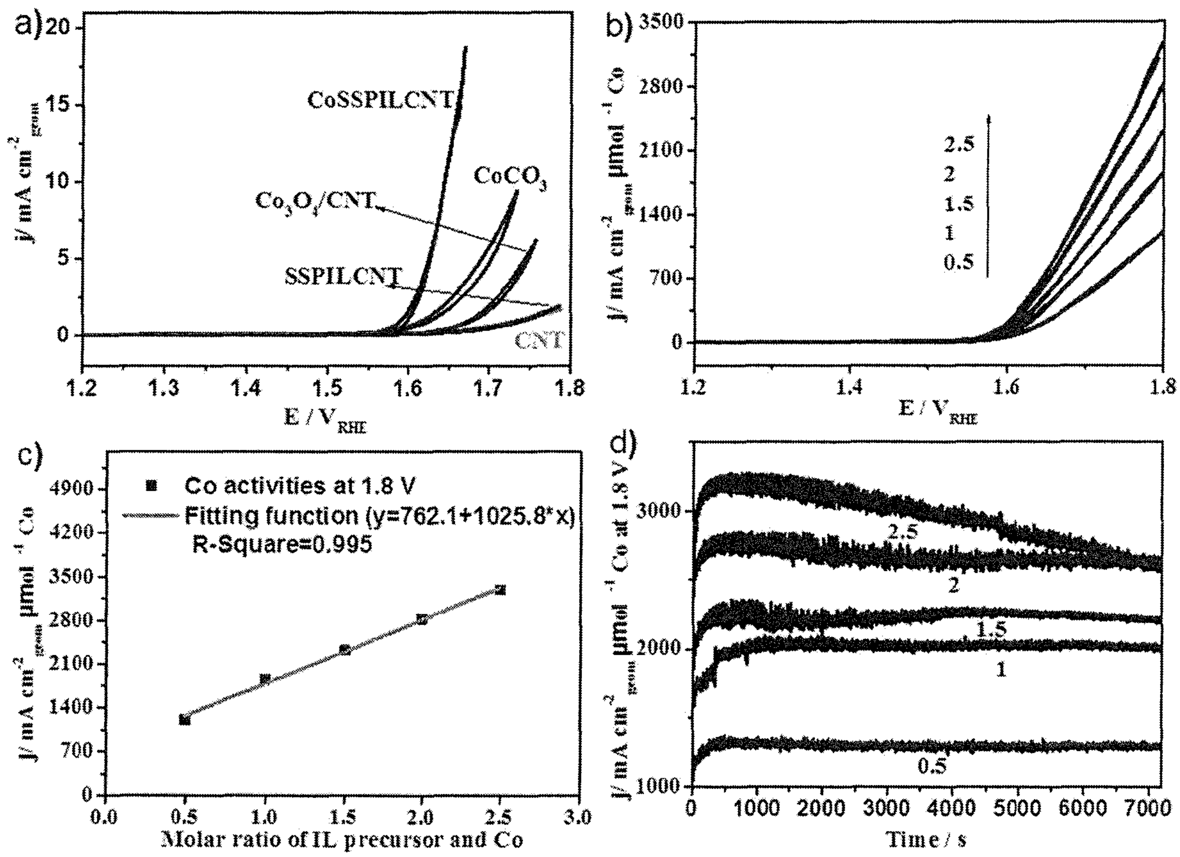


Figure 8.

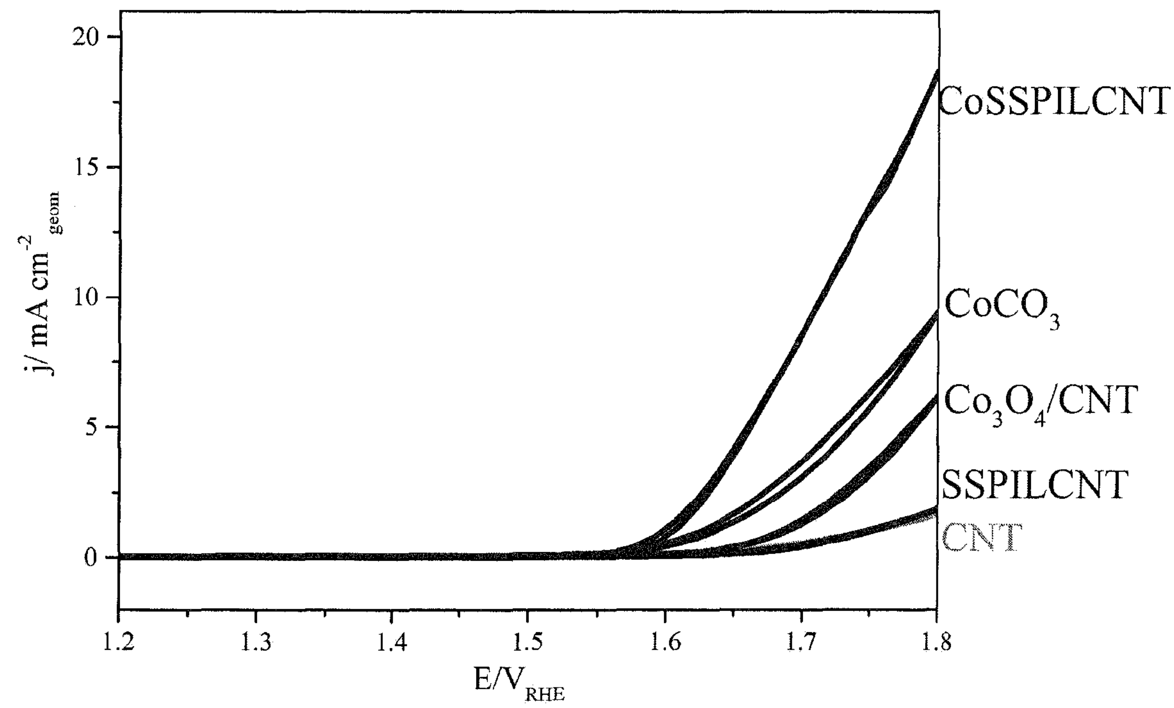


Figure 9.

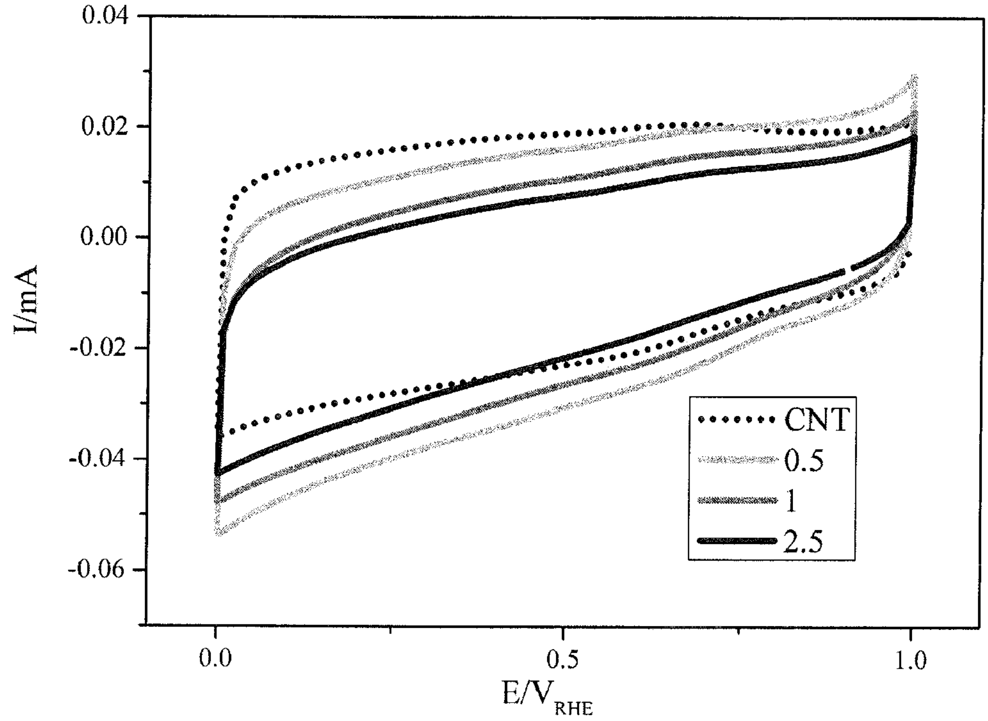


**Figure 10.**

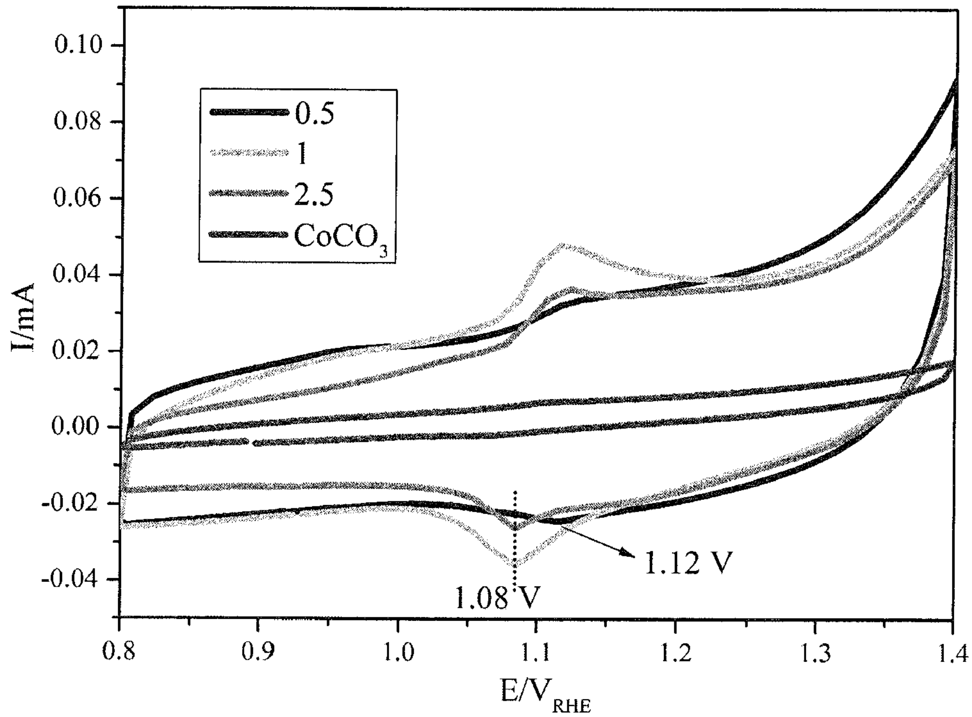


**Figure 11.**

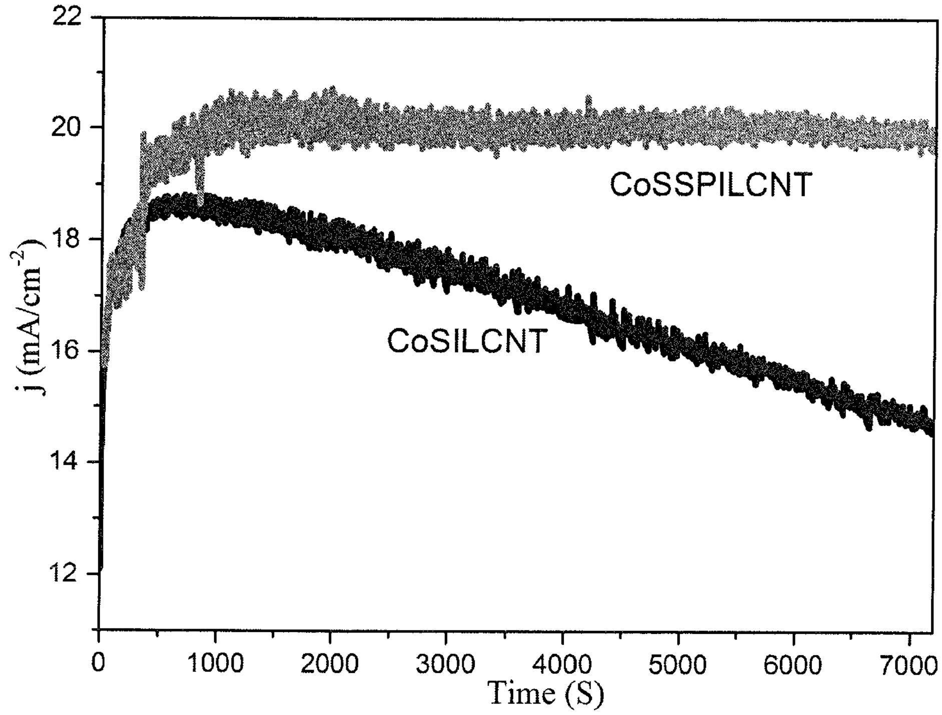


Figure 12.

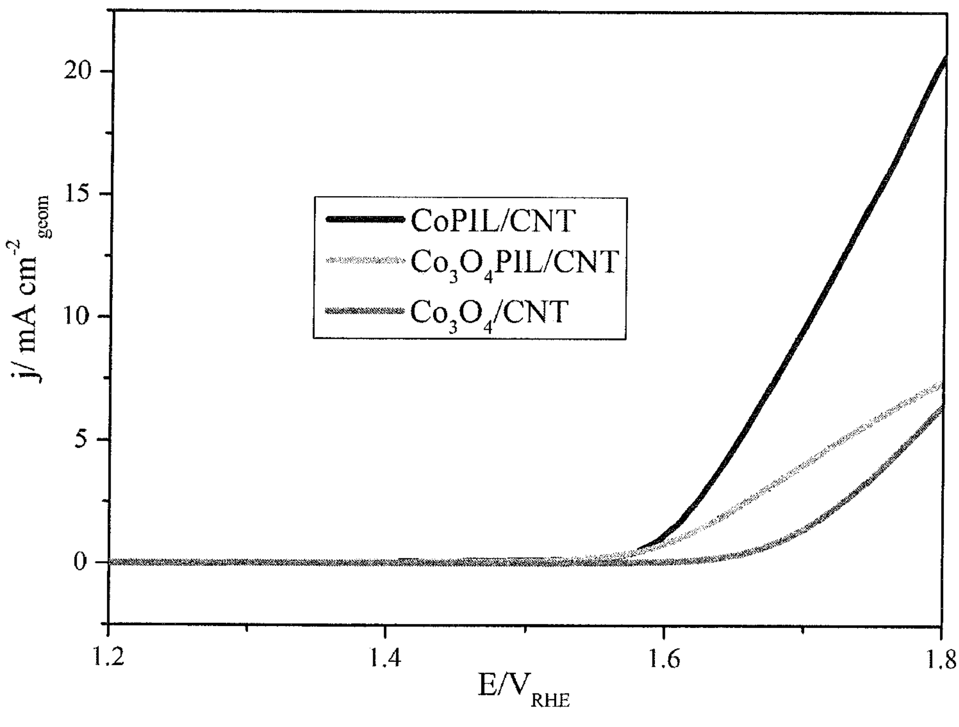


Figure 13.

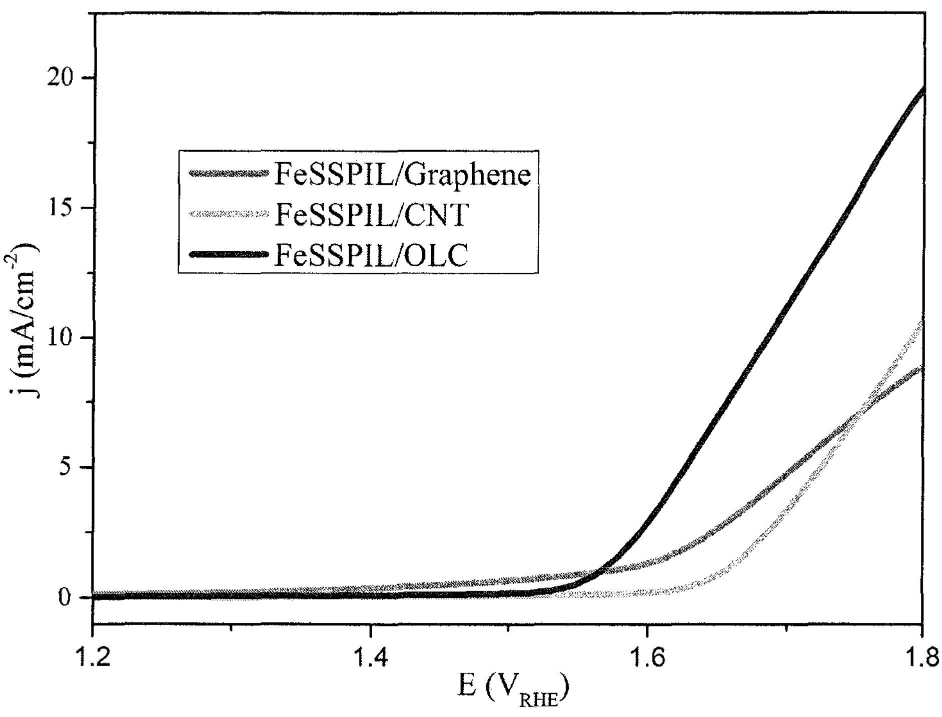


**Figure 14.**

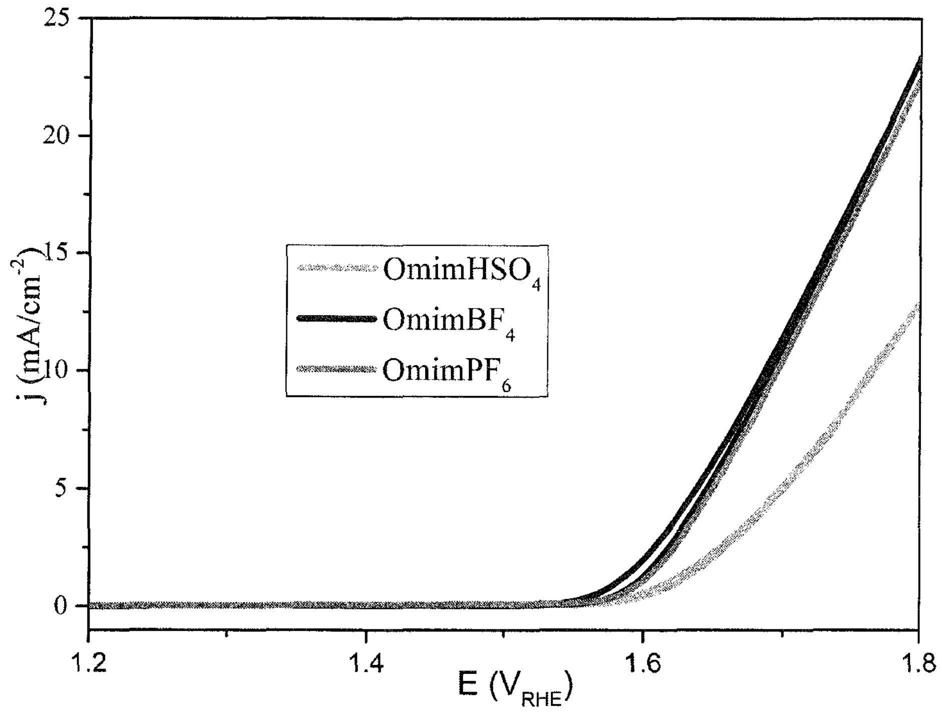


**Figure 15.**

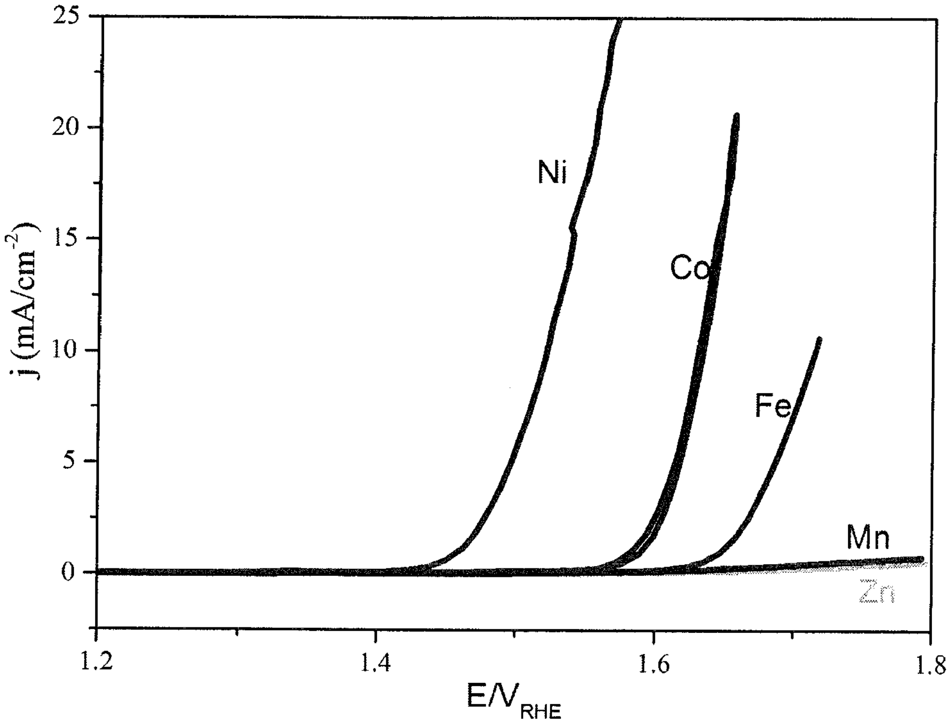


**Figure 16.**

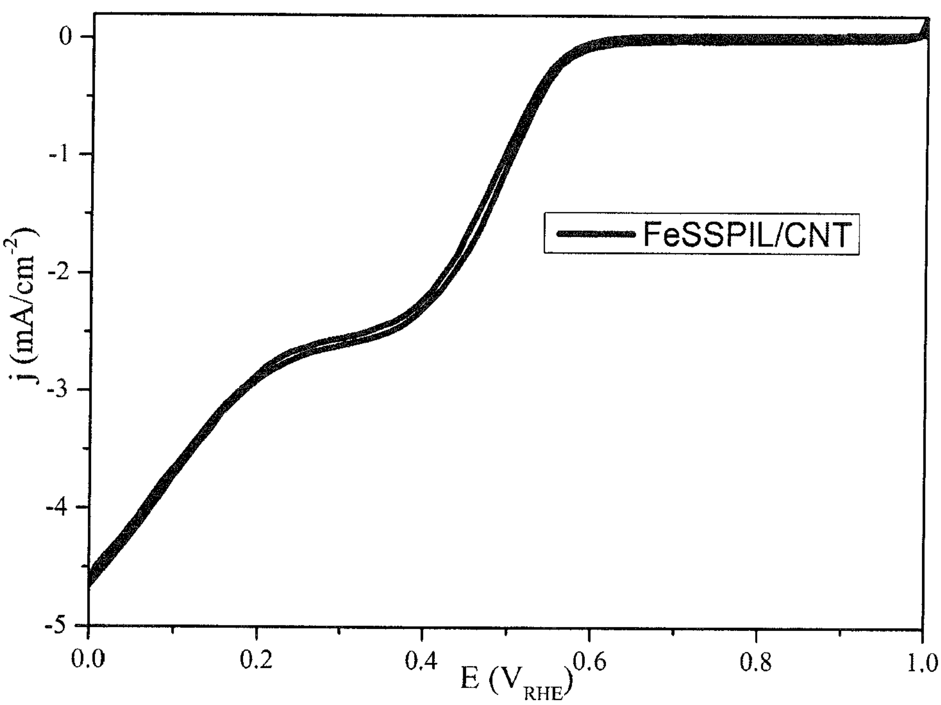


**Figure 17.**

Europäisches Patentamt
European Patent Office
Office européen des brevets

# EUROPEAN SEARCH REPORT

Application Number
EP 17 19 3447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOHUA WU ET AL: "Functionalization of Carbon Nanotubes by an Ionic-Liquid Polymer: Dispersion of Pt and PtRu Nanoparticles on Carbon Nanotubes and Their Electrocatalytic Oxidation of Methanol", ANGEWANDTE CHEMIE INTERNATIONAL EDITION, vol. 48, no. 26, 15 June 2009 (2009-06-15), pages 4751-4754, XP055117303, ISSN: 1433-7851, DOI: 10.1002/anie.200900899 * page 4751 * ----- | 1-16 | INV. H01M4/86 C25B11/04 H01M4/90 |
| X | EP 2 082 800 A1 (PETROLEO BRASILEIRO SA [BR]) 29 July 2009 (2009-07-29) * claim 1 * ----- | 12 | |

TECHNICAL FIELDS SEARCHED (IPC)
H01M
C25B

The present search report has been drawn up for all claims

1

| Place of search | Date of completion of the search | Examiner |
|---|---|---|
| Munich | 18 December 2017 | Martín Fernández, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 17 19 3447

This annex lists the patent family members relating to the patent documents cited in the above-mentioned European search report. The members are as contained in the European Patent Office EDP file on The European Patent Office is in no way liable for these particulars which are merely given for the purpose of information.

18-12-2017

| Patent document cited in search report | Publication date | Patent family member(s) | Publication date |
|---|---|---|---|
| EP 2082800 A1 | 29-07-2009 | AR 070210 A1 | 25-03-2010 |
| | | BR PI0800207 A2 | 08-09-2009 |
| | | CO 6180083 A1 | 19-07-2010 |
| | | EP 2082800 A1 | 29-07-2009 |
| | | US 2009197760 A1 | 06-08-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *J. Am. Chem. Soc.,* 2016, vol. 138, 11017-11030
- *J. Am. Chem. Soc.,* 2009, vol. 131, 3838-3839
- *Angew. Chem. Int. Ed.,* 2009, vol. 48, 4751-4754
- *Chem. Rev.,* 2002, vol. 102, 3667-3691
- *Nat. Mater.,* 2009, vol. 8, 621-629
- *Green Chem.,* 2011, vol. 13, 1210-1216
- *Green Chem.,* 2015, vol. 17, 1107-1112
- *Angew. Chem. Int. Ed.,* 2015, vol. 54, 231-235
- *Journal of Physics: Condensed Matter,* 1993, vol. 5, 2277
- *Science,* 2010, vol. 328, 342-345
- *J. Am. Chem. Soc.,* 2009, vol. 131, 2768
- *Electrochim. Acta,* 2006, vol. 51, 2614-2619
- *Macromol. Symp.,* 2007, vol. 249, 551-556
- *Catalysis,* 2009, vol. 52, 213-272